(19)

Europäisches
Patentamt
European
Patent Office
Office européen
des brevets

(11) **EP 2 012 173 A2**

(12) **EUROPEAN PATENT APPLICATION**

(43) Date of publication:
**07.01.2009 Bulletin 2009/02**

(51) Int Cl.:
**G02F 1/1334** (2006.01)     *G02B 5/32* (2006.01)
**G02B 5/18** (2006.01)

(21) Application number: **08159278.4**

(22) Date of filing: **27.06.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **03.07.2007 US 947690 P**

(71) Applicant: **JDS Uniphase Corporation
Milpitas CA 95035 (US)**

(72) Inventors:
• **Tan, Kim Leong
Santa Rosa, CA 95407 (US)**
• **Shemo, David M.
Windsor, CA 95492 (US)**

(74) Representative: **Fulton, David James
Murgitroyd & Company
165-169 Scotland Street
Glasgow G5 8PL (GB)**

(54) **Non-etched flat polarization-selective diffractive optical elements**

(57)     A polarization-selective diffractive optical element includes a liquid crystal polymer film supported by a substrate. The liquid crystal polymer film includes an array of pixels, each pixel encoded with a fixed liquid crystal director such that each liquid crystal director is aligned in a common plane perpendicular to the liquid crystal polymer film and provides a predetermined pattern of out-of-plane tilts. A size of the pixels in the array and the predetermined pattern are selected such that the liquid crystal polymer film forms a phase hologram for diffracting light polarized parallel to said common plane and a zeroth order diffraction grating for light polarized perpendicular to the said common plane. The non-etched and flat phase hologram is suitable for a wide range of applications.

Fig. 2a

EP 2 012 173 A2

**Description**

## CROSS-REFERENCE TO RELATED APPLICATIONS

This application claims priority from US Provisional Application No. 0/947,690, filed July 3, 2007, which is hereby incorporated by reference.

## MICROFICHE APPENDIX

Not Applicable.

## TECHNICAL FIELD

The present application relates generally to diffractive optical elements, and in particular to non-etched and flat polarization-selective diffractive optical elements.

## BACKGROUND OF THE INVENTION

Diffraction gratings and more complex thin holograms, encoded onto programmable liquid crystal (LC)-based spatial light modulators (SLMs), have been actively researched as a way to alter the wavefront of an optical beam. For example, these LC/SLMs may be used for adaptive-optic phase correction, in a synthetic phase array, or in a telecommunication beam steering switch. The LC/SLMs are based typically on either a transmissive or reflective type micro-display panel in order to provide the small pixel pitch requirement. LCs with both in-plane (e.g., such as in-plane-switching (IPS) using nematic LC and ferroelectric LC) and out-of-plane (e.g., planar or parallel aligned (PA) and vertical aligned (VA) nematic LC) rotation of LC director are utilized. The ferroelectric LC (FLC) will be polarization insensitive if the hologram is configured with two phase levels. Polarization insensitivity can be important for systems where the light source has unknown or scrambled polarization, such as for a beam-steering switch used in telecommunication networks. On the other hand, since out-of-plane switching nematic LCs (e.g., PA and VA nematic LC) are known to be polarization sensitive, holograms recorded onto these LC/SLMs generally require a known polarization. Accordingly, these types of LC holograms are typically only useful in optical systems and instrumentation where the light sources are polarized.

Although programmable thin holograms encoded onto LC/SLMs are very versatile, these active components are not cost effective for many applications. In addition, these programmable thin holograms are known to provide relatively small steering angles. For example, a state-of-the art LC on Silicon (LCoS) panel may have less than $10\mu m$ pixel pitch, which at a wavelength of $0.5\mu m$ and utilizing a minimum of two pixels per grating period, provides a maximum beam deflection angle of about 1.4 degrees. All other programmable hologram output (e.g., termed the replay) will have even smaller deflection angles.

Nevertheless, there has been interest in forming passive diffraction gratings or holograms based on these active device. For example, in US Pat. No. 6,304,312, a diffraction grating is formed by injecting liquid crystal monomer between two transparent substrates, each of which is coated with an alignment layer. In one example, the alignment layer is uniform and the diffraction grating is effected by applying a voltage to patterned electrodes provided on the transparent substrates. In another example, the diffraction grating is effected with a patterned alignment layer (e.g. patterned using a photolithography technique). After the liquid crystal layers are aligned, they are then polymerized and/or cross-linked to fix the alignment. Note that the liquid crystal polymer pixels in this reference are limited to having either homeotropic alignment (i.e., perpendicular to the substrate) or planar alignment (i.e., parallel to the substrate). The resulting binary grating (e.g., having a pitch of about $8\mu m$) is reported to provide only about forty percent diffraction efficiency.

More recently, patterned photo-alignment layers having an even smaller pixel pitch (e.g., $1\mu m$ or shorter) have been proposed. For example, in US Pat. No. 7,375,784 a micro-patterned alignment layer is disclosed. While the alignment layer is limited to having only homeotropic alignment (i.e., perpendicular to the substrate) and planar alignment (i.e., parallel to the substrate), the liquid crystal may be aligned with a range of out-of-plane angles. More specifically, local alignment of the liquid crystal is stated to be determined by the average areas of underlying homeotropic alignment and planar alignment regions. Unfortunately, since the alignment of the liquid crystal is related to an average of different regions it cannot be patterned with precision and thus, is not suitable for many applications.

In fact, in order to optimize precision and cost effectiveness, most applications requiring passive holograms use diffractive optical elements with physical steps. Unfortunately, the etching and/or molding processes used to form these diffractive optical elements are relatively complex and time consuming. In addition, the surface relief structure generally requires complex optical thin-film coating processes to protect the delicate structures.

It would be advantageous to provide a method of fabricating thin film gratings or holograms that is relatively simple, low cost, and/or that is suitable for a wide range of applications.

## SUMMARY OF THE INVENTION

The instant invention relates to a method of forming diffraction gratings and/or holograms with thin liquid crystal polymer layers. In one embodiment a thin liquid crystal polymer is formed on an alignment layer, which has been irradiated with linearly polarized light at non-normal incidence through a photo-mask. In this embodiment, the photo-mask is patterned such that the light is incident on different areas of the alignment layer with different energy densities. Advantageously, each region of the alignment layer irradiated with a different energy density provides a different out-of-plane tilt angle in the overlying region of the liquid crystal polymer coated thereon. Accordingly, a hologram having a plurality of tilt-angles between zero and ninety degrees is easily formed with precision. As a result, relatively complex hologram structures are easily designed for a wide range of applications. In addition, since the liquid crystal polymer film is coated on a single substrate and patterned without etching and/or molding, the resulting holograms are flat and can be provided at low cost.

The instant invention also relates to diffractive optical elements formed using these non-etched and flat (NEF) holograms, wherein the liquid crystal (LC) out-of-plane tilt varies with transverse spatial coordinate in a predetermined manner. In one embodiment, the resulting NEF thin diffractive optical element has the LC director in each pixel of the hologram aligned along a given azimuthal plane. The plane containing the LC director distribution is also the tilt plane. Only light rays polarized along the tilt plane are affected by the variable amount of retardance encoded continuously or in a pixelated manner. The variable amount of retardance is a manifestation of variable optical path length modulation as a function of transverse spatial coordinate. Conversely, the light rays polarized along a direction orthogonal to the tilt plane sample only the ordinary index of refraction regardless of the LC direct tilt. The variable optical path length modulation is absent and this orthogonal polarization essentially experiences a zeroth-order grating. In other words, these high-efficiency gratings are polarization-selective. For a first linear polarization, the incident light rays are allowed to diffract to non-zeroth order locations while for a second orthogonal linear polarization, the incident light rays are not diffracted and their light energy is preserved within the zeroth diffraction order.

The instant invention is also related to the use of the NEF diffraction gratings and/or holograms in various applications.

In accordance with one aspect of the instant invention there is provided a polarization-selective diffractive optical element comprising: a substrate; an alignment layer disposed on the substrate; and a liquid crystal polymer film disposed on the alignment layer, the liquid crystal polymer film including a plurality of liquid crystal directors aligned parallel to a first plane, the first plane perpendicular to a surface of the liquid crystal polymer film, an out-of-plane tilt of the plurality of liquid crystal directors varying with transverse spatial coordinate in a predetermined pattern, the predetermined pattern selected such that the liquid crystal polymer film forms a polarization-selective phase hologram, whereby linearly polarized light having a first polarization is transmitted through first and second spatially distinct regions of the liquid crystal polymer film with a relative phase delay to provide a non-zeroth order diffraction output, and linearly polarized light having a second polarization is transmitted through the first and second spatially distinct regions with substantially zero relative phase delay to provide a zeroth order diffraction output, the first polarization parallel to the first plane, the second polarization orthogonal to the first polarization, the first region including a first liquid crystal director, the second region including a second liquid crystal director, the first and second liquid crystal directors having different out-of-plane tilts.

In accordance with another aspect of the instant invention there is provided a method of fabricating a polarization-selective diffractive optical element comprising: irradiating an alignment layer at oblique angle through a photo-mask with linearly polarized UV light; coating a liquid crystal layer on the irradiated alignment layer, the liquid crystal layer including a liquid crystal polymer precursor; irradiating the liquid crystal layer to form a liquid crystal polymer film, the liquid crystal polymer film including a plurality of liquid crystal directors aligned parallel to a first plane, the first plane perpendicular to a surface of the liquid crystal polymer film, an out-of-plane tilt of the plurality of liquid crystal directors varying with transverse spatial coordinate in a predetermined pattern, the predetermined pattern selected such that the liquid crystal polymer film forms a polarization-selective phase hologram, whereby linearly polarized light having a first polarization is transmitted through first and second spatially distinct regions of the liquid crystal polymer film with a relative phase delay to provide a non-zeroth order diffraction output, and linearly polarized light having a second polarization is transmitted through the first and second spatially distinct regions with substantially zero relative phase delay to provide a zeroth order diffraction output, the first polarization parallel to the first plane, the second polarization orthogonal to the first polarization, the first region including a first liquid crystal director, the second region including a second liquid crystal director, the first and second liquid crystal directors having different out-of-plane tilts.

In accordance with another aspect of the instant invention there is provided a polarization-selective diffractive optical element comprising: a substrate; a liquid crystal layer supported by the substrate in the form of a thin planar film having an array of pixel regions that have been encoded with a finite number of differing liquid crystal director alignments, wherein the liquid crystal director alignment in each pixel region is substantially uniform and permanent throughout the pixel, wherein the liquid crystal director alignment in each pixel region lies in a common plane perpendicular to a surface of the substrate in order to impart a phase delay to linearly polarized light incident on the array that is polarized parallel to the said plane of the liquid crystal directors and to have substantially no phase delay effect on linearly polarized light incident on the array that is polarized perpendicular to the plane of the liquid crystal directors, and wherein an arrangement of phase delays in the pixel array, pixel size, and pixel shape, are predetermined so that the liquid crystal layer provides non-zeroth order diffractive output for light polarized parallel to the plane of the liquid crystal directors and zeroth-order diffractive output for light polarized perpendicular to the plane of the liquid crystal directors.

In accordance with another aspect of the instant invention there is provide an optical pick-up unit comprising: a light source for emitting linearly polarized light having a first polarization; a collimating lens for collimating the linearly polarized light; an objective lens for focusing the collimated linearly polarized light onto an optical disc; a quarter-wave plate disposed between the collimating lens and the objective lens for providing quarter-wave retardance such that light reflected from the optical disc is transmitted towards the first lens as linearly polarized light having a second polarization, the second polarization orthogonal to the first polarization; and a polarization-selective diffractive optical element disposed between the collimating lens and the quarter-wave plate, the polarization-selective diffractive optical element including a substrate, an alignment layer disposed on the substrate, and a liquid crystal polymer film disposed on the alignment layer, the liquid crystal polymer film including a plurality of liquid crystal directors aligned parallel to a first plane, the first plane perpendicular to a surface of the liquid crystal polymer film, an out-of-plane tilt of the plurality of liquid crystal directors varying with transverse spatial coordinate in a predetermined pattern, the predetermined pattern selected such that the liquid crystal polymer film forms a polarization-selective phase hologram, wherein the polarization-selective diffractive optical element is disposed such that the first polarization is polarized perpendicular to the first plane and such that the polarization-selective phase hologram provides zero order diffraction for the linearly polarized light having the first polarization and non-zeroth order diffraction for the linearly polarized light having the second polarization, the non-zeroth order diffraction providing a beam deflection sufficient to redirect the linearly polarized light having the second polarization away from the light source and towards a detector.

## BRIEF DESCRIPTION OF THE DRAWINGS

Further features and advantages of the present invention will become apparent from the following detailed description, taken in combination with the appended drawings, in which:

FIG. 1a is a side-view of index indicatrix projection of a prior art LC hologram with azimuthal angle distribution;

FIG. 1b is a plan-view of the LC hologram shown in FIG. 1a;

FIG 2a is a side-view of index indicatrix of an LC hologram with polar angle distribution in accordance with one embodiment of the present invention;

FIG. 2b is a plan-view of the LC hologram shown in FIG. 2a;

FIG. 2c is a plan-view of director orientations of an LC hologram with polar angle distribution wherein the tilt-plane does not coincide with the grating vector;

FIG. 3 is a schematic diagram showing a LPUV exposure system setup for LPP for imposing a variable-tilt oblique alignment in a LCP layer;

FIG. 4 is a schematic diagram showing the effective in-plane birefringence and effective out-of-plane LC director tilt as a function of the LPUV dose of the LPP alignment layer;

FIG. 5 shows the out-of-plane polar angle tilt profile of a $\sigma$=-1/4 polarization-selective grating giving an asymmetric replay and having four discrete states of LC polar angle tilts;

FIG. 6 shows the projection of uniaxial O-plate birefringence into in-plane and out-of-plane birefringence components;

FIG. 7 shows the phase difference of a given LC director tilt, as compared to an A-plate configured pixel, using a proprietary LCP uniaxial material at $\lambda$=400nm;

FIG. 8 shows the out-of-plane polar angle tilt profile of a $\sigma$=$\pm$1/2 polarization-selective grating giving a symmetric replay and having two discrete states of LC polar angle tilts;

FIG. 9a illustrates a spatial phase profile of a binary LC grating with $\sigma$=$\pm$1/2 fractional order where the dark/bright stripes represent two LC polar angle tilts having an optical path difference (OPD) of $\pi$ phase;

FIG. 9b illustrates a spatial phase profile of a binary hologram for a symmetric spot array generator, where $\sigma$=$\pm$1/2 and $\tau$=$\pm$1/2 fractional order;

FIG. 9c illustrates a spatial phase profile of a binary hologram for a non-equal spacing spot array generator, where $\sigma$ = $\pm$1/8, $\tau$ = $\pm$3/8 fractional order;

FIG. 10 is a schematic diagram of a prior art 3-wavelength HD-DVD/DVD/CD optical pick-up unit (OPU);

FIG. 11 is a schematic diagram of a prior art OPU including a non-periodic phase mask that functions as a polarization-selective wavefront aberration compensator;

FIG. 12 is a schematic diagram of a prior art non-periodic phase-mask including of annular regions, wherein the optical axis of the uniaxial A-plate is oriented uniformly across all pupil positions;

FIG. 13 shows the phase profile of the phase mask illustrated in FIG. 12 along the XZ cross-section;

FIG. 14 is a schematic diagram of an OPU including a polarization-selective non-etched flat (NEF) holographic optical element that functions as a polarization-selective wavefront aberration compensator, in accordance with one embodiment of the instant embodiment;

FIG. 15 shows the polar-angle tilt profiles of a LC hologram according to one embodiment of the present invention (top plot shows the out-of-plane polar-angle tilt profiles within each phase-mask region for two cases of maximum LC director tilt angles, whereas the middle and bottom plots show the required index indicatrix projection along the cross-sectional planes of XZ and YZ, respectively);

FIG. 16 is a schematic diagram of a prior art OPU including a surface-relief structure (SRS) and/or planar hologram as a polarization-selective beam steering device;

FIG. 17 is a schematic diagram of an OPU including a polarization-selective non-etched flat holographic optical element as the polarization-selective beam steering device, in accordance with one embodiment of the instant invention;

FIG. 18 shows a three-wavelength periodic grating structure steering the light beams to the first order;

FIG. 19 shows the diffraction angular spectra of a three-wavelength BD/DVD/CD system, for the phase profiles shown in FIG. 18, where each encoding pixel is 1 $\mu$m;

FIG. 20 is a schematic diagram showing part of an OPU including polarization-selective non-etched flat holographic optical elements as the polarization-selective wavefront aberration compensator and the beam steering device;

FIG. 21 is a schematic diagram showing part of an OPU including a polarization-selective non-etched flat holographic optical element as the polarization-selective beam steering device for tapping off beamlets in disc-tracking and objective lens focusing, control and feedback;

FIG. 22 is a schematic diagram of a thin LC hologram incorporated with a quarter-wave plate in accordance with one embodiment of the instant invention;

FIG. 23 is a schematic diagram of a thin LC hologram mounted on a reflective substrate or on a reflective layer on a transparent substrate, in accordance with one embodiment of the instant invention;

FIG. 24 is a schematic diagram of a flat LC hologram used for polarization-selective beam-steering;

FIG. 25 is a schematic diagram of a prior art Rochon polarizer utilizing negative uniaxial birefringent crystal such as calcite or $\alpha$-BBO;

FIG. 26 is a schematic diagram of an external-cavity laser utilizing plano-plano reflectors, wherein the laser includes a laser crystal, a flat LC hologram polarization-selective beam-steering device, and a second harmonic generation crystal;

FIG. 27 is a schematic diagram of a dual-stage flat LC hologram beam steering device wherein the selected polarization in both stages are parallel;

FIG. 28 is a schematic diagram of a dual-stage beam-displacer with flat LC hologram beam steering devices wherein the selected polarization in both stages are parallel and the diffraction angle sense is opposite;

FIG. 29 is a schematic diagram of a dual-stage flat LC hologram beam steering device wherein the selected polarizations in both stages are orthogonal and both polarization beamlets are deflected to the opposite angular directions;

FIG. 30 is a schematic diagram of a dual-stage flat LC hologram beam walk-off device wherein the selected polarizations in both stages are orthogonal and both polarization beamlets are deflected to the same angular direction;

FIG. 31 shows a GSolver simulated single stage grating (a) and dual-stage right-right (b) and left-right (c) blazed gratings;

FIG. 32 is a schematic diagram of a dual-stage flat LC hologram beam walk-off device producing parallel o-beam and e-beam outputs;

FIG. 33 is a schematic diagram of a dual-stage flat LC hologram beam walk-off device mounted on a substrate and producing parallel o-beam and e-beam outputs;

FIG. 34 is a schematic diagram of a two-dimensional beam walk-off device for optical low-pass filtering;

FIG. 35 is a schematic diagram showing a square 2D walk-off (a) and a diamond 2D walk-off (b);

FIG. 36 is a plan view of (a) a first stage LC hologram, (b) second stage QWP, and (c) a third stage LC hologram with orthogonal steering;

FIG. 37 is a plan view of (a) a first stage LC hologram with horizontal grating vector, (b) orthogonal linear polarization output of first stage LC hologram and their resolved components parallel and orthogonal to a new coordinate basis, and (c) a second stage LC hologram with orthogonal steering (vertical grating vector) and rotated tilt-plane;

FIG. 38 is a schematic diagram of a prior art Babinet-Soleil's compensator with a movable top birefringent wedge; and,

FIG. 39 is a schematic diagram of a variable retarder with a LC film having a polar-angle distribution, in accordance with one embodiment of the instant invention.

It will be noted that throughout the appended drawings, like features are identified by like reference numerals.

## DETAILED DESCRIPTION

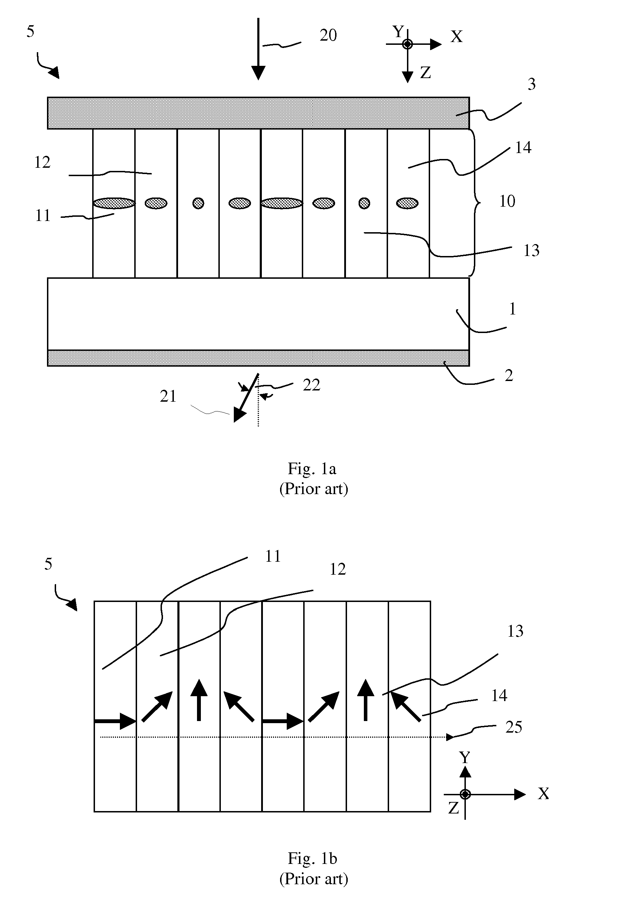

A prior-art thin liquid crystal (LC) hologram structure is illustrated in Fig. 1, which is a thickness cross-sectional view along the grating vector. The grating vector is the plane where the light is dispersed by diffraction effect. It is also the pixelation direction for a 1D grating or hologram. The hologram **5** includes a substrate **1,** onto which an array of pixels **10** having varying azimuthal LC director orientations is disposed. Four discrete azimuthal LC director orientations are shown as **11, 12, 13** and **14.** More specifically, the projection of the LC index indicatrix onto the plane of drawing (XZ-plane) is shown. Pixel **11** has its projected director aligned parallel to the X-axis, whereas pixel **13** has its projected director aligned parallel to the Y-axis. The other two states, pixels **12** and **14** have their projected directors contained within the XY plane but non-parallel to both the X- and Y-axes. The hologram element **5** also includes AR coating stacks **2** and **3** to aid transmission efficiency.

In operation, a light ray incident along the Z-axis **20** is spatially sampled by the hologram, wherein the spatial phase encoding causes the beam to be steered at an angle **22** as output ray **21.** It is noted that, depending on the hologram design, other diffraction orders, in addition to **21** may also be present at the output. The output may also contain the zeroth order (undiffracted) light, as a result of diffraction inefficiency.

A key feature of this prior-art LC hologram is that all the pixels are configured as either A-plates (i.e., an optical retardation element having its extraordinary axis oriented parallel to the plane of the layer) or O-plates (i.e., an optical retardation element having its extraordinary axis oriented obliquely to the plane of the layer), with variable LC director azimuthal orientations. In other words, there is no variation in the out-of-plane tilt of the LC directors. Referring to Fig. 1b, the variation in LC director azimuthal orientation across several pixels is shown. The four discrete pixel states, **11, 12, 13** and **14,** have their LC directors aligned approximately at 0, 45, 90 and 135 degrees, respectively, relative to the hologram vector **25.**

Note that the hologram configuration illustrated in Figs. 1a and 1b is polarization sensitive. In particular, it is expected that for one circular polarization the four pixel states represent progressively advancing phase distribution and therefore the light will be steered towards one direction. For the opposite handedness of circular polarization, the same four pixel encoding represent progressively delaying phase distribution and the light is steered to the symmetric orders. However, while this LC grating is polarization sensitive, it is not polarization selective. The diffraction effect cannot be completely turned off, even if one has complete control over the incoming polarization. The two circular Eigen-polarizations always replay to symmetric patterns. Other polarizations (linear or in general elliptical) are combinations of the two circular states and hence replay to some mixture of the two circular polarization outputs. No input polarization selection is able to preserve all the light power in the undiffracted order.

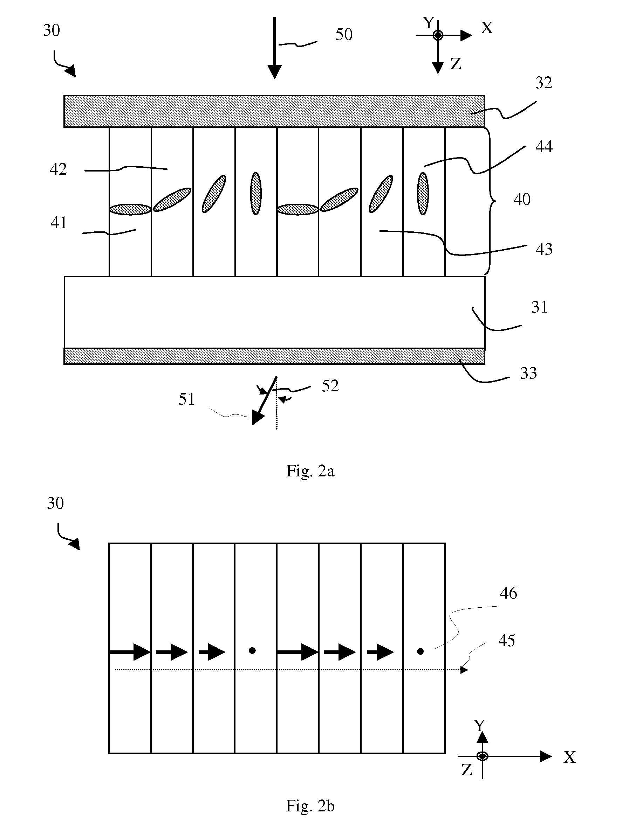

Referring to Figs. 2a and 2b, there is shown a polarization-selective hologram in accordance with one embodiment of the instant invention. Fig. 2a is a cross-sectional view along the grating vector **45.** The hologram **30** includes a substrate **31** onto which a continuously-varying or a pixelated LC layer **40** is disposed. The hologram element **30** also includes AR coating stacks **32** and **33** to aid transmission efficiency. Polarization-selectivity is provided by aligning the LC directors in different pixels with variable amount of out-of-plane tilts, while maintaining a uniform azimuthal orientation. Four discrete pixels states **41, 42, 43** and **44** are shown with approximately 0, 33.6, 53.1 and 90 degree of out-of-plane tilt angles, respectively. At a nominal $\lambda$=400nm, the ordinary index $n_o$ and extraordinary index $n_e$ of refraction values are 1.61 and 1.75, respectively, such that these four pixels give rise to [0 -0.0461 -0.0921 - 0.1382] phase difference per unit length relative to the A-plate configured pixel **41.** For an LC film thickness of approximately 2.17$\mu$m, these four pixels provide for [0, $\pi/2$, $\pi$, $3\pi/2$] phase encoding, which are the optimal discrete states for four-level phase-only holograms.

In operation, X-polarized input light **50** incident along the Z-axis is steered to the main diffraction order **51** with a deflection angle of **52.** It is noted that, depending on the hologram design, other diffraction orders in addition to **51** may also be present at the output. The output may also contain the zeroth order (undiffracted) light, as a result of diffraction inefficiency. With the orthogonal linear polarization input (for example Y-polarization), the LC hologram **30** presents no optical path length modulation. This light is not diffracted and is contained in the zeroth-order output. In other words, by configuring the LC hologram as an array of variable-tilt encoded pixels, the thin hologram is made polarization-selective. With one linear polarization, the hologram diffracts. With the orthogonal linear polarization, the hologram is highly transparent.

Referring to Fig. 2b, the plane of tilt **46** is parallel to the hologram vector **45.** The series of dark arrows indicate the effective in-plane birefringence. More generally, the hologram vector dictates the direction at which the light ray is diffracted whereas the plane of tilt dictates the linear polarization that sees the LC hologram. The linear polarization that is diffracted is aligned parallel to the tilt-plane. The linear polarization orthogonal to the tilt plane is undiffracted.

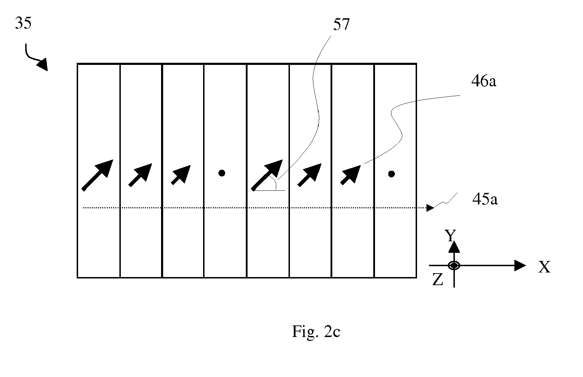

Referring to Figs. 2c, there is shown a polarization-selective hologram in accordance with another embodiment of the instant invention. In this embodiment, the hologram vector **45a** of the LC hologram **35** is parallel to the X-axis, but the tilt plane **46a** is chosen with an azimuthal offset **57** to the hologram vector. As a result, light rays polarized parallel to the tilt plane **46a** are diffracted along a plane parallel to the grating vector **46a.** Note that while the out-of-plane angle of the LC director in each pixel varies between pixels, the azimuthal angle of the LC director is the same between pixels.

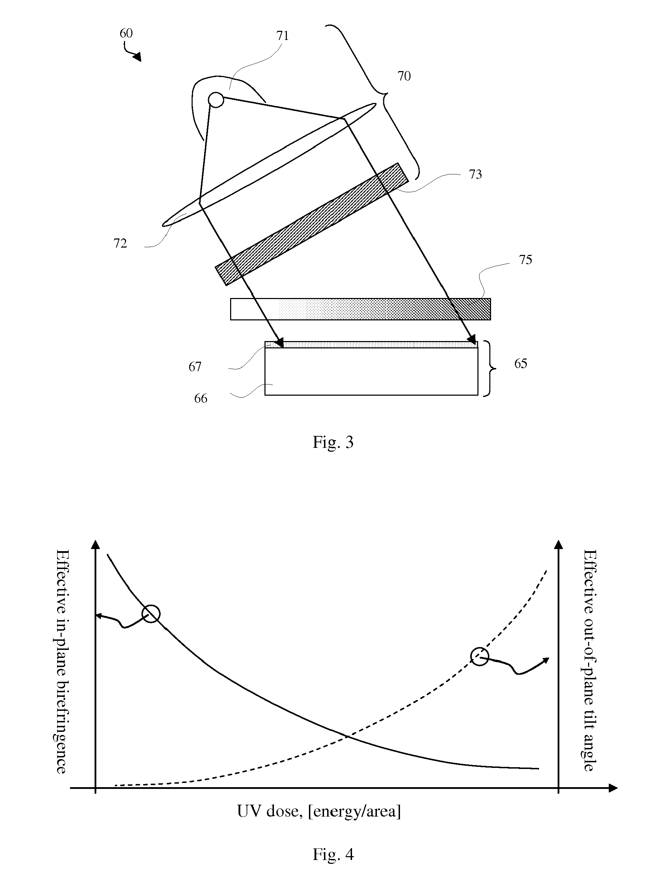

Referring to Fig. 3, there is shown a system for fabricating a flat non-etched polarization-selective diffractive optical element (e.g., a hologram) in accordance with one embodiment of the invention. The optical setup **60** includes a mount for supporting the device under fabrication **65,** a linearly polarized ultra-violet (LPUV) light exposure system **70,** and a photo-mask **75.** The device under fabrication **65** includes a substrate **66** onto which a linear photo-polymerizable (LPP) alignment layer **67** is deposited. The LPUV exposure system **70** includes a UV light source **71,** a collimating lens **72,** and a UV polarizer **73.** The photo-mask **75** is patterned to provide varying levels of light to the alignment layer in a predetermined manner. In particular, the photo-mask **75** is patterned to provide varying levels of energy density to the alignment layer as a function of transverse spatial coordinate. In one embodiment, the photo-mask **75** is a variable transmission mask. In another embodiment, the photo-mask **75** is a variable size aperture mask.

In operation, the light source **71** provides LPUV light at an oblique angle to the surface of the substrate **66.** In this embodiment, the light source is shown to be tilted relative to the horizontal substrate. In other embodiments, the substrate is tilted relative to the light source. The non-normal LPUV light incidence and its energy density dose induce a change in the alignment layer **67** that causes the LC director in a subsequently deposited LCP pre-cursor layer to be aligned at an oblique angle (tilted out of the plane of the substrate at some azimuthal angle). In this embodiment, the UV polarizer **73** is oriented to transmit, with high transmission, UV light polarized parallel to the plane of drawing (e.g., which is the plane of incidence). Depending on the chemistry of the LPP material, this configuration will typically result in the LC director of the subsequently deposited LCP layer to be aligned in an azimuthal plane that is parallel or orthogonal to the LPUV plane of incidence. The actual out-of-plane tilt of the LC director is dependent on the LPUV energy density dose delivered to the LPP alignment layer **67.** Since the photo-mask **75** provides various energy densities to the alignment layer **67** in a predetermined pattern a spatially variable tilt LCP film, which has variable in-plane retardance, results. Although the out-of-plane tilt of the LC director varies in a predetermined manner across the film, the azimuthal angle of the LC directors is constant as for example, illustrated in Figs. 2b and 2c. For example, in one embodiment the LC director is aligned homogeneously along a single azimuthal plane but with variable tilt angles. Once the LPP layer is exposed to LPUV in this manner, then a thin layer of liquid crystal polymer precursor is coated on the alignment layer. This layer is then exposed to UV light (e.g., which does not have to be polarized) to crosslink the LCP precursor and fix the LC directors at the predetermined oblique angles. Accordingly, this method allows diffraction gratings and more complex thin holograms to be encoded on thin LCP layers, supported by a single substrate, to provide stable diffractive optical elements that are suitable for a wide range of applications. In addition, since the LCP film need only be supported by a single substrate the thin NEF polarization-selective diffractive element is easily integrated with other optics.

Note that this fabrication technique has been described with reference to a LCP precursor, which is preferably cross-linked with a subsequent UV irradiation to convert it to LCP. In general, the LCP layer may be formed using any of the LPP and liquid crystalline compounds known in the art, the latter of which may be polymerized and/or cross-linked with UV irradiation and/or thermally. For example in one embodiment, the LPP layer is formed by spin-coating a 2 wt% solution of a LPP in cyclopentanone on a glass substrate (e.g., for 60 seconds at 3000 RPM) to obtain a 50 nm thick alignment layer. In other embodiments, the LPP layers are formed using another coating method such as wire-coating, gravur-coating, slot-coating, etc. LPP layers, which often include cinnamic acid derivatives and/or ferulic acid derivatives, are well known in the art. In accordance with the instant invention, the LPP layer will be of the type to generate an out-of-plane tilt in the subsequently applied LC or LCP layers. Various compounds suitable for forming the LPP layer are available from Rolic (Allschwil, CH). In one embodiment, the LPP coated glass is baked for a predetermined time (e.g., 5 minutes) at a predetermined temperature (e.g., 180 degrees) before being LPUV irradiated through the photo-mask. In one embodiment, the LPP is irradiated in a two step process. In the first step, the layer is exposed to linearly polarized light without the photo-mask (e.g., through a standard aperture, to set the lowest tilt-angle at all locations). In a second step, the layer is exposed to the linearly polarized light through the photo-mask (e.g., to set the higher tilt-angles at select locations corresponding to the transmitting areas of the photo-mask). In this embodiment, the total energy density (i.e. dose) delivered will be higher at those regions exposed in the first and second irradiation steps, as compared to those regions only exposed in the first irradiation step. In general, the required energy density and wavelength of illumination will be dependent on the LPP material. In general, the energy density will be typically between 30 - 300 mJ/cm2, while the wavelength range will be typically between 280 and 365 nm. In the embodiment shown above, the photo-mask is patterned to provide varying amounts of energy. In other embodiments, the photo-mask is moved relative to the substrate to provide the varying amounts of energy. In each case, the incident angle of LPUV will be typically between 20 and 60 degrees. As discussed above, the irradiated LPP layer is used as an orientation layer for the subsequently coated LCP layer. In one embodiment, the LCP layer is formed from liquid crystalline material that includes a liquid crystal polymer precursor. LCP precursor materials, which for example may include a crosslinkable diacrylate nematic liquid crystalline compound, are well known in the art. In accordance with the instant invention, the LCP material will be of the type that will appropriately respond to the tilt inducing LPP layer. Various LCP precursor compounds suitable for forming the LCP layer are available from Rolic (Allschwil, CH). In one embodiment the LCP precursor layer is spin-coated on the LPP layer as a 15 wt% solution in anisole. In other embodiments, the LCP layers are formed using another coating method such as wire-coating, gravur-coating, slot-coating, etc. The resulting LLP/LCP device is then typically baked (i.e annealed) for a predetermined time to promote good alignment of the LCP to the LPP alignment layer. Advantageously, the subsequent photochemical cross-linking of the LCP layer is believed to provide improved reliability under high power illumination and short wavelength laser exposure.

An example of a response curve of LPUV exposure dose for a LPP/LCP system is shown in Fig. 4. The solid line plots the in-plane birefringence as a function of the LPUV dose density. In the case of creating a variable retarder, the LPUV dose density corresponds to a transverse spatial coordinate. The effective in-plane birefringence is obtained by taking the projection of the full LC indicatrix onto the device plane. The decreasing effective birefringence with increasing LPUV energy density indicates that the out-of-plane LC director tilt increases with LPUV energy density. The LC director tilt is plotted as a dashed line in Fig. 4.

In general, the photo-mask **75** will be patterned in dependence upon the intended application. In one embodiment, the photo-mask **75** is patterned to provide varying energy densities to the alignment layer **67** in a pixelated manner. In other embodiments, the photo-mask 75 is patterned to provide varying energy densities to the alignment layer **67** in a continuously graded manner. In one embodiment, the pixels are periodic (e.g., at regular intervals). In another embodiment, the pixels are non-periodic (e.g., random or in a predetermined pattern). Advantageously, the use of the photo-mask **75** allows the LCP layer to be patterned with a large number of phase profile levels and with increased precision. In one embodiment, the photo-mask 75 is patterned to provide two levels of phase profile. In another embodiment, the photo-mask **75** is patterned to provide more than two levels of phase profile. In general, most applications will require at least 4 levels of phase profile in order provide reasonable diffraction efficiency. The level of phase profile on diffraction efficiency is described below.

The simplest thin hologram is a regular grating, where the grating period has as many pixels as there are distinct phase levels. A phase-only grating is also called a kinoform. The diffraction expression predicts that a $m$-level grating produces $p$-order diffraction output with an efficiency, $\eta_p^m$, of

$$\eta_p^m = \mathrm{sinc}\!\left(\frac{p\pi}{m}\right)^2 \qquad\qquad (1)$$

where sinc(x) is sin(x)/x, sinc(0)=1, and $p = ...-2m+1,- m+1,1,m+1,2m-1,...$

The $p$-order diffracted angle is governed by,

$$\sin(\theta_p) = \frac{p\lambda}{\Lambda}, \qquad\qquad (2)$$

where $\lambda$ is the wavelength of illumination and $\Lambda$ is the grating period (i.e., the pitch). Taking a small angle approximation (e.g., $\sin(\theta) \sim \theta$) and a Fourier transform lens of focal length $f$,

$$\Delta x = f\theta_p = p\frac{f\lambda}{2w}, \qquad\qquad (3)$$

where $\Delta$x is the spatial translation of the diffracted output, and w is the pixel pitch, the expression above can be generalized as,

$$\Delta x = \sigma\,\frac{f\lambda}{w} \ \text{ and } \ (\Delta x, \Delta y) = (\sigma, \tau)\frac{f\lambda}{w}, \qquad\qquad (4)$$

for 1D and 2D hologram replay, respectively, where $(\sigma, \tau)$ represents the fractional hologram main diffraction order location within the zeroth-order replication region, and $f\lambda/w$ is the physical size centered at the optical axis (e.g., see K.L. Tan et al., "Dynamic holography for optical interconnections. II. Routing holograms with predictable location and intensity of each diffraction order," J. Opt. Soc. Am. A, 18(1), pp. 205-215, 2001). The fractional orders lie within $\pm 1/2$ replication region. In this notation, the spatial sampling and replication (i.e., artifacts of hologram recording device and hologram replay) is decoupled from the hologram generation. For each grating recording, unless all $m$ level phase steps are present in the grating and the total available phase range is $2\pi*(m\text{-}1)/m,$ and each encoding cell has 100% pixel-fill duty cycle ratio, the diffraction efficiency of the first replay order will be lower than predicted in eq. (1).

Assuming that the LC hologram recording and replay operation is idealized (lossless), the ideal first order diffraction efficiencies for several phase-only gratings are given as follows:

$$m=2, \eta_1=40.5\%, m=4, \eta_1=81.1\%, m=8, \eta_1=95.0\%, m=12, \eta_1=97.7\% \text{ and } m=16, \eta_1=98.7 \quad (5)$$

Accordingly, for a highly efficient hologram replay, the number of distinct phase levels should be greater than 8.

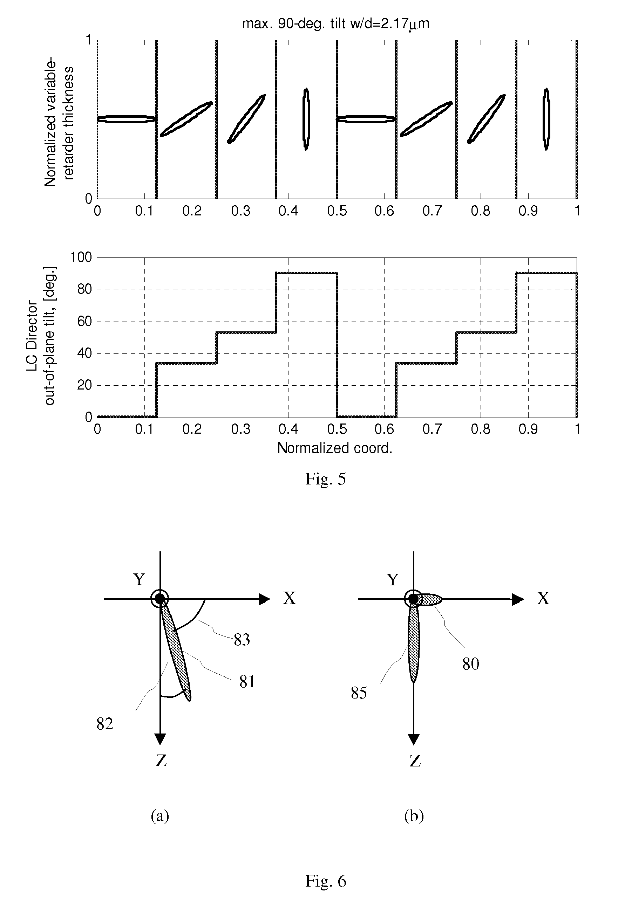

A four-level phase-only hologram is illustrated in Fig. 5. The top plot represents a side view showing the LC director orientation along the tilt-plane. The bottom plot, which is an out-of-plane polar angle tilt profile, shows the discrete tilt steps required to realize the lossless quarternary phase hologram. This configuration is frequently termed -1/4 fractional replay, because the light is mainly steered to ¼ distance to the left of the zeroth order within the central replay replication. This $\sigma$=-1/4 polarization-selective periodic phase mask (e.g., a grating), which exhibits asymmetric replay, diffracts light having a linear polarization input parallel to the plane of drawing and is transparent to the orthogonal linear polarization. As discussed above, this four-level hologram is expected to yield a maximum of 81 % diffraction efficiency in the first diffraction order. In order to increase the diffraction efficiency, more phase levels are required. Without loss of generality, a single encoding element can be represented as an LC director inclined at an angle with respect to the Z-axis and contained within the XZ plane. Referring to Fig. 6, the LC director 81 forms a polar angle offset 82 $\theta_c$ with the Z-axis. The LC director out-of-plane tilt 83 $\theta_t$ is given by $\pi/2\text{-}\theta_c$. From the quadratic equations describing the index ellipsoid, the in-plane $n_a$ and out-of-plane $n_c$ effective indices are represented by the projection onto the XY-plane 80 and projection along the Z-axis 85. These effective indices are given by,

$$\frac{1}{[n_a(\theta_t;\lambda)]^2} = \frac{\cos^2(\theta_t)}{[n_e(\lambda)]^2} + \frac{\sin^2(\theta_t)}{[n_o(\lambda)]^2}, \text{ and} \quad (6)$$

$$\frac{1}{[n_c(\theta_t;\lambda)]^2} = \frac{\sin^2(\theta_t)}{[n_e(\lambda)]^2} + \frac{\cos^2(\theta_t)}{[n_o(\lambda)]^2}, \quad (7)$$

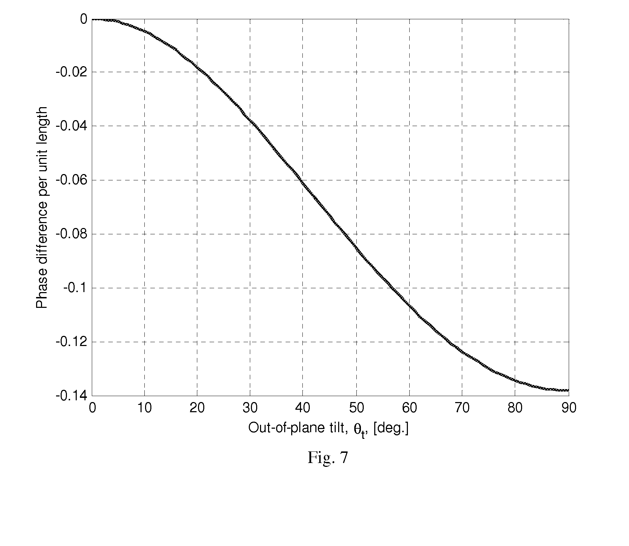

where $n_e(\lambda)$ and $n_o(\lambda)$ are the dispersion of the extraordinary and ordinary indices of the uniaxial material. In terms of advancing phase, relative to an A-plate aligned pixel ($\theta_t$=0), Eq. (6) gives a non-linear increase of phase ramp with increasing of out-of-plane tilt. The phase difference relative to an A-plate configured pixel (i.e., $n_a(\theta_t;\lambda)\text{-}ne(\lambda)$) is plotted in Fig. 7. From the plot, an encoding pixel, aligned with the LC tilt at ~56.7°, yields a phase difference per unit length of-0.1. In other words, a 2$\mu$m pixel height provides for 200nm phase advance relative to the A-plate pixel. This gives the required $\pi$ phase step at $\lambda$=400nm. A linear phase ramp, as is often required in a multiple-level phase hologram, can be configured from the phase per unit length versus tilt angle profile.

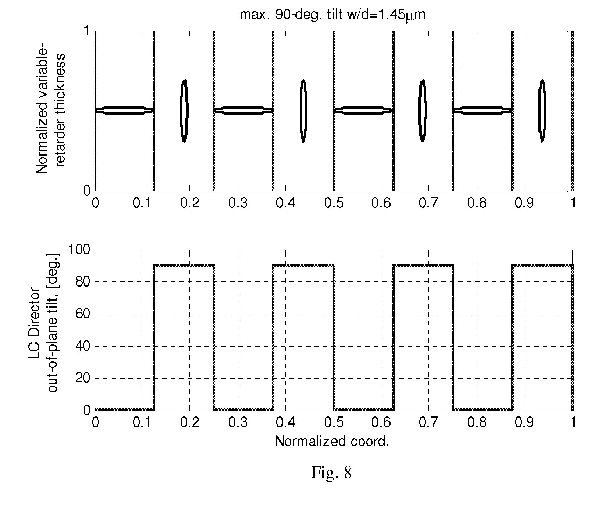

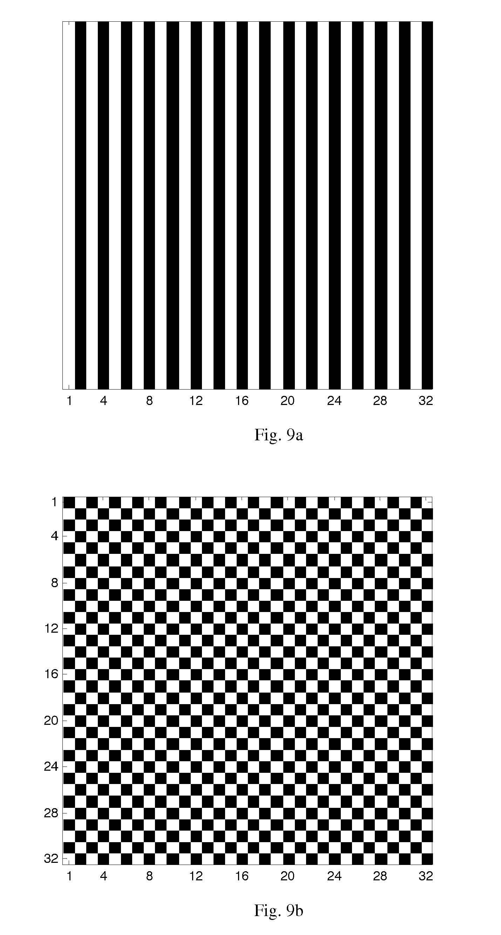

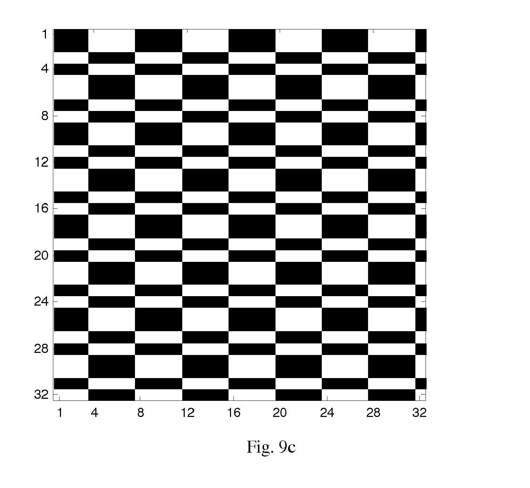

Referring to Figs. 8 and 9a-c, there are shown various embodiments of thin, polarization-selective holograms having two phase levels. Fig. 8 shows a binary LC hologram, encoded as alternating A-plate/C-plate pixels. The top plot represents a side view showing the LC director orientation along the tilt-plane. The bottom plot shows the out-of-plane polar angle tilt profile. This $\sigma$=$\pm$-1/2 polarization-selective periodic phase mask (e.g., a grating) gives a symmetric replay and diffracts light having a linear polarization input parallel to the plane of drawing and is transparent to the orthogonal linear polarization. As discussed above, this two-level hologram is expected to yield a maximum of 40.5% diffraction efficiency in the first diffraction order. In order to increase the diffraction efficiency, more phase levels are required. Note that this hologram gives the highest frequency encoding capability at the given minimum pixel size. With the same LC material use in the calculations described above, this hologram is only 1.45$\mu$m thick, sufficient to create a $\pi$ phase step with the full LC birefringence. An image of this binary LC hologram may be presented as a series stripes, as shown in Fig. 9a. In this embodiment, the bright stripes represent 0 phase pixels whereas the dark-stripes represent the $\pi$ phase pixels. In other embodiments, the bright stripes represent $\pi$ phase pixels whereas the dark-stripes represent the 0 phase pixels (i.e., the two LC polar angle tilts have an optical path difference of $\pi$ phase). Referring to Fig. 9b, there is shown an embodiment of a 2D beam steering hologram. This checker-board hologram steers the light to the maximum spatial frequency locations for both X and Y directions. Fig. 9c shows an embodiment of a crossed Dammann grating. This hologram steers light three times as far in the Y-direction as it steers light along the X-direction. In all three binary hologram examples, it has been assumed that the hologram operates in the scalar diffraction domain. The effective indices for TE and TM waves are not impacted by the pixelation. Rather, the plane of tilt within the hologram encoding, which is uniform over the entire hologram and may or may not coincide with any of the 1D or 2D steering plane, dictates the linear polarization for which the hologram diffracts and the orthogonal linear polarization for which the hologram is transparent.

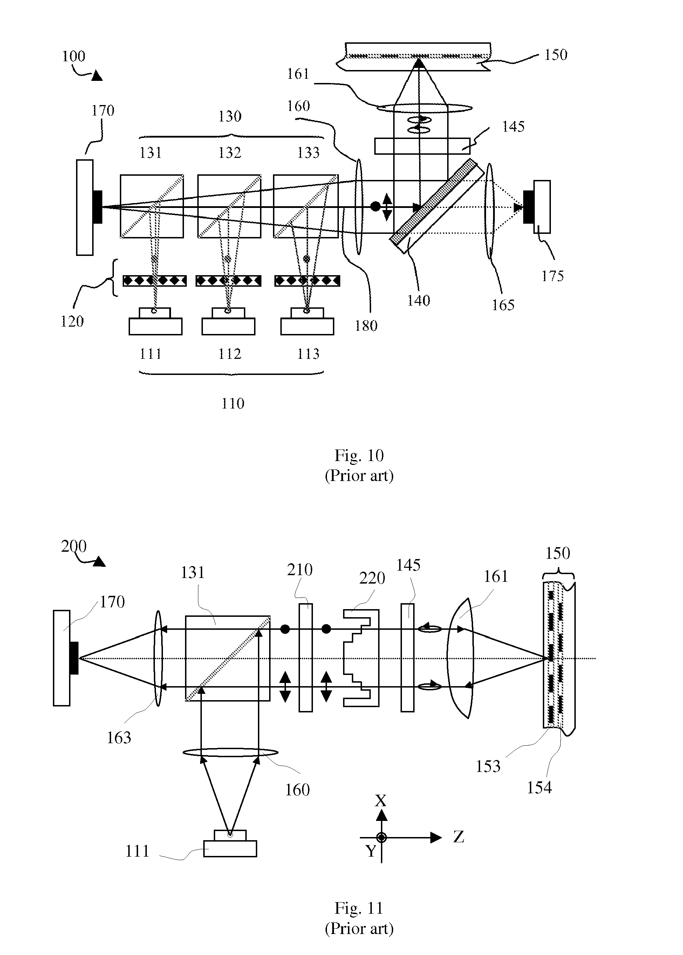

One application of a polarization-selective hologram in accordance with one embodiment of the instant invention is in an optical pick-up unit (OPU). For example, consider the prior art OPU system illustrated in Fig. 10. The OPU **100** includes an array of semiconductor laser sources **110,** the output of which are spatially multiplexed by an array of Polarization Beam Combiner (PBC) cubes **130,** collimated by a lens system **160,** folded by a leaky mirror **140,** and imaged (focused) onto a single "pit" area on the rotating disc media **150** via a second objective lens element **161.** The leaky mirror allows a small fraction (e.g. 5%) of the incident beam energy to be tapped off and focused onto a monitor photodiode (PD) **175** via another lens element **165.** The array of semiconductor laser sources **110** is shown as 3 discrete laser diodes (LD), including a first LD **111** at λ=400nm, a second LD **112** at λ=660nm, and a third LD **113** at λ=780nm. The outputs from the array of LDs **110** are substantially linearly polarized (e.g., 'S' polarized with respect to the PBC hypotenuse surface). The linearly polarized beams are passed through an array of low-specification polarizers **120,** which protect the LD sources **110** from unwanted feedback should the orthogonal polarization ray be reflected towards the laser cavities by the first **131,** second **132,** and/or third **133** PBCs in the array **130.**

In operation, the main beam in each of the LD sources is steered along the common path **180** towards the information layer (IL) within the disc media **150.** Prior to reaching the achromatic quarter-waveplate (QWP) **145,** the beam is substantially linearly polarized. The achromatic QWP **145** transforms the linear polarization (LP) into circular polarization (CP), the handedness of which is dependent on the orientation of the optic axis of the achromatic QWP **145** (e.g., for a given S- or P-polarization input). In this example, where 'S' polarization is input to the achromatic QWP **145,** left-handed circular polarization will result if the optic axis (i.e., slow-axis) of the achromatic QWP **145** is aligned at 45° counter clockwise (CCW) with respect to the P-plane of the PBC (e.g., with the assumption of intuitive RH-XYZ coordinate system while looking at the beam coming to the observer). When the rotating disc media **150** is a prerecorded compact disc (CD) or digital versatile disc (DVD), where there is a physical indentation of a recorded pit, the optical path length difference between a pit and its surrounding "land", at 1/6 to 1/4 wave, causes destructive interference (e.g., at least partial) and reduces the light detected by the main photodiode **170** positioned at the second port of the **PBC** cube array **130.** In the absence of a pit, there is no destructive interference and the light will be effectively transformed by the achromatic QWP **145,** upon double-passing there through, from the initially S-polarization to P-polarization, such that substantially the same light power returns towards the PBC cube array **130.**

When the rotating disc medium **150** includes more than one information layer per single side of disc, such as a DVD dual-layer (DL) disc, the separation between the two IL layers is typically between 20-30μm in order to reduce coherent crosstalk when accessing the disc. Although the objective lens **161** is readily adjusted to focus onto the required IL depth, this refocusing causes spherical aberrations. For the DVD legacy system with an objective lens having about 0.6 numerical aperture (NA) and utilizing 650nm of illumination wavelength, the change in IL depth may not be critical. However, in other DL formats (e.g., Blu-ray (BD) and high definition (HD)-DVD), the corresponding increase in NA (e.g., 0.85 NA for BD) and decrease in wavelength of illumination (e.g., approximately 405nm) causes spherical aberrations of roughly 200-300 mλ when the high NA objective lens is refocused onto a second IL depth (e.g., for dual-layer disc format having an approximately 20μm spacer layer with ~1.5 index of refraction). There are various ways to reduce this aberration. For example, it is common to mechanically adjust the elements in a compound objective lens and/or adjusting the position of the collimation lens to alter the vergence of the entrance beam to the objective lens. Alternatively, various non-mechanical aberration correction schemes have been proposed.

Referring to Fig. 11 there is shown one example of an OPU including non-mechanical aberration correction (i.e., which is similar to the OPU system proposed in US Pat. No. 6,947,368). In this figure, elements similar to those described in Fig. 10 are referred to with like numbers. In addition to the optical components described in Fig. 10, the OPU **200** in Fig. 11 also includes an actively switched LC cell **210** and a non-periodic phase-mask **220,** which are inserted in the parallel beam section between the collimating lens **160** and the objective lens **161.** Note that the collimating lens **160** is positioned before the PBC **131** rather than after.

In operation, the beam that is deflected 90-degrees by the PBC **131** is S-polarized with respect to the PBC hypotenuse plane. This beam is passed through the active LC cell **210** such that one of the two orthogonal linear polarizations is output (e.g., S-polarization and P-polarization with respect to the PBC hypotenuse (also parallel to Y-axis and X-axis, respectively)). Depending on the LC mode of operation, the electrical driving state (on or off) for producing a given output (for example S-polarization shown in Fig. 11) can be different. With an 90-degree twisted nematic LC cell, the cell has to be driven off to produce the same polarization output as it is the input. With a VA nematic LC cell, the same polarization output as in the input is obtained without driving the cell. Yet other LC modes such as FLC and IPS nematic LC will require appropriate voltage driving to either alter the polarization or maintain the polarization of incoming light beam.

In Fig. 11, S-polarized radiation is presented to the phase mask **220.** The phase-mask **220** includes a series of physical steps etched into a birefringent layer or a birefringent substrate. In general, fabrication of these physical steps is achieved using photo-lithography and dry/wet etching techniques. In one embodiment, the etched steps of the phase mask **220** are exposed to air. In another embodiment, the phase mask **220** is formed by filling the air gaps obtained from patterning and etching with an isotropic material, which may or may not possess the same index as one of the birefringent medium principal indices of refraction. In this embodiment, the air/birefringent phase mask **220** has a uniform slow-axis orientation aligned parallel to the P-plane (e.g., the plane of drawing in Fig. 11) and the step height is configured as $2\pi$ phase jump for air and $n_e$ index of refraction. Hence, when S-polarization is transmitted through the phase-mask **220** it imparts a phase-modulation. When P-polarization (not shown) is allowed to come through the LC cell **210,** the phase mask is inactive.

When the objective lens is at the nominal focus (e.g., to be focussed on the inner information layer **154** at depth ~100$\mu$m), the LC cell **210** transmits P-polarized light (not shown) that passes through the quarter waveplate **145** and is reflected back and focussed on the detector **170** via lens **163.** When reading/writing to the outer information layer **153** (e.g., at ~80$\mu$m depth), the objective lens is refocused. Refocusing without changing the vergence of the beam coming to the objective lens causes spherical aberrations. In order to reduce the spherical aberrations, the LC cell **210** is used to transmit S-polarization when the focal position is changed from the nominal value. The S-polarization samples the $n_o$ index in the phase mask **220,** to produce the desired wavefront.

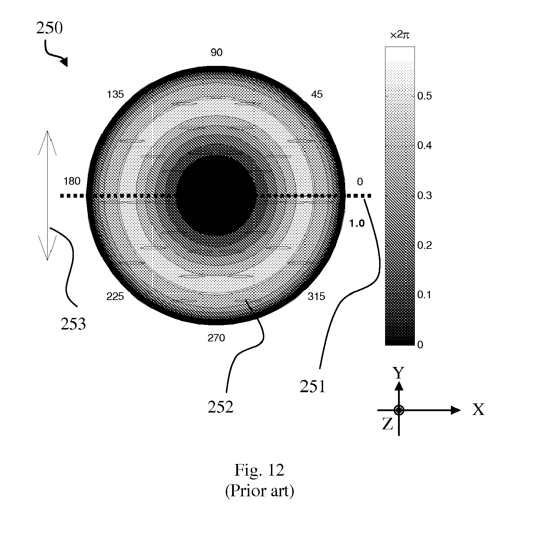

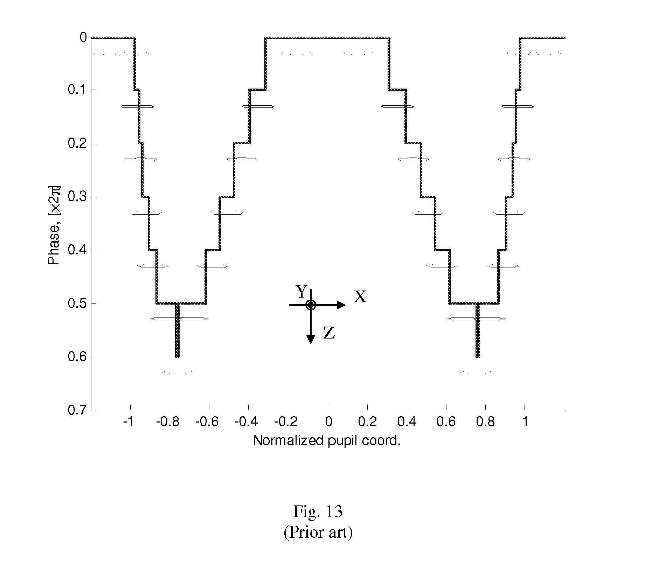

Note that the phase mask **220** is a surface-relief structure (SRS) including a series of annular zones. For example, consider the prior art phase mask **250** illustrated in Fig. 12, which has a central reference-phase zone. The birefringent material has its optic axis **252** aligned along the X-axis. The incoming S-polarized beam **253** is aligned to the Y-axis. Where the incoming beam samples the air segment within the phase mask, it represents a phase advance relative to the central annular zone. It is the opposite in the focusing beam when the focal distance is brought from ~100$\mu$m to ~80$\mu$m IL depth. The phase profile across the XZ cross-section **251** is shown in Fig. 13. The example indicated close to $1.2\pi$ of total phase range is required to reduce the rms wavefront aberrations, as a result of the focal change, from approximately 200 m$\lambda$ to ~40 m$\lambda$. The corrected wavefront aberration is diffraction limited at the operating wavelength.

Referring again to Fig. 11, the etched phase mask **220** in combination with the LC switch **210** allows two polarization states to be selectively corrected for wavefront aberrations dependent on which information layer is being accessed on disc. For a given nominal objective lens focal (either to the inner or the outer information layer), the complement phase profile of the associated aberrations when refocusing is implemented can be encoded onto the phase mask. By switching the LC cell output polarizations, each information layer is accessed with wavefront aberrations contained within the diffraction limit.

Unfortunately, since the phase mask **220** is typically fabricated by etching a birefringent element, it is generally considered to be a relatively expensive optical element. In accordance with one embodiment of the instant invention, a photo-cured LCP layer encoded with a predetermined phase profile (e.g., formed by patterning the effective in-plane birefringence using the oblique photo-alignment technique described with reference to Fig. 3) is used in a non-mechanical aberration correction scheme.

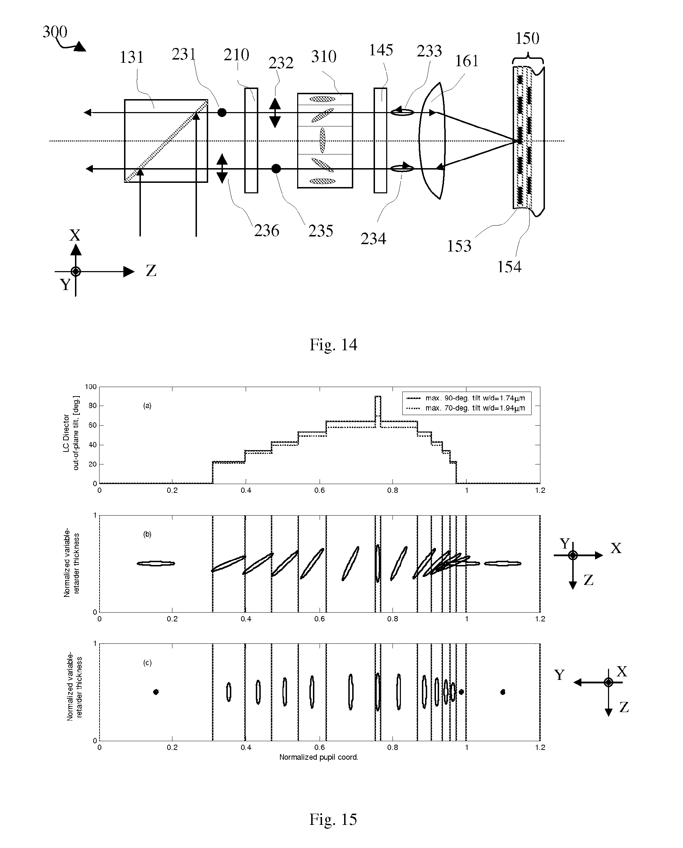

Referring to Fig. 14, a schematic diagram of an OPU **300** in accordance with one embodiment of the instant invention is shown. In this figure, elements similar to those described in Figs. 10 and 11 are referred to with like numbers. Note that a non-etched and flat (NEF) LC phase mask **310** is provided instead of the conventional etched phase mask **220.**

In operation, a collimated beam of light is coupled as S-polarization **231** into the common path through the reflection port of a PBC **131.** The LC switch **210** converts the S-polarization to the orthogonal P-polarization **232** (e.g., with respect to the PBC hypotenuse). This P-polarization is parallel to the plane of drawing and is also parallel to the uniform azimuthal orientation of the thin NEF LC phase mask **310.** The NEF phase mask has a variable LC out-of-plane tilt, as a function of the pupil position. The effective extraordinary index changes with LC director tilt. Hence, the optical path length is tailored by configuring the LC tilt. In the active phase correction case, the P-polarization samples the phase of each encoding pixel differently, in a manner required to create the complementary phase profiles associated to changing the nominal focal point of the objective lens, when a second information layer is to be accessed, at a different depth than the first information layer where the objective lens has been configured aberration-free. In the non-active phase correction case with the second linear polarization output from the LC cell (not shown), the beam samples the $n_o$ index regardless of the tilt within each encoding pixel. The LC hologram is a transparent zeroth-order grating and no phase preconditioning of the beam is effected.

This preconditioned beam then traverses a quarter-waveplate **145** which converts the first linear polarization **232** into a first circular polarization **233.** Upon reflection at the information layer, a second (opposite handedness) circular polarization **234** is obtained. This beam is again converted to the second linear polarization **235** by the quarter-waveplate **145.** The phase correction is active in the first pass but the phase correction is inactive in the second pass and vice versa, depending on the LC cell switching. The second pass phase correction does not matter since the beam is not refocused tightly on the way to the photodetector.

The LC director tilt profile across the pupil coordinate is shown in Fig. 15. Plot (a) shows the out-of-plane LC director tilt for two cases of maximum tilts: 70 and 90 degrees, in order to generate the discrete-step phase profile as shown in Fig. 13. The calculation wavelength is 400nm and at this wavelength, the ordinary index $n_o$ and extraordinary index $n_e$ of refraction values are 1.61 and 1.75, respectively. The required LC film thickness is approximately 1.94$\mu$m and 1.74$\mu$m for creating a 1.2$\pi$ maximum phase range with 70-degree and 90-degree maximum tilt, respectively. This film is very thin and it has a constant physical thickness across the aperture. The polar angle distribution across the pupil gives in the phase correction function. The LC director (also the slow-axis) is aligned along a common plane for example along the XZ-plane in the example given. The LC director profile for several discrete pixels, along the XZ plane, also the tilt plane, is illustrated in plot (b) of Fig. 15. Again the central annular zone has a reference phase provided by the $n_e$ index of the LC film. Progressing outwards from the pupil center, the phase initially advances, by sampling an effective index, between the $n_e$ and $n_o$ of the LC film until zone #7 where the LC is aligned at the maximum tilt (either 70-degree or 90-degree). Beyond this annular zone, the phase difference to the central zone decreases progressively towards the limit of the pupil by decreasing the LC tilt. Along a plane orthogonal to the tilt plane, the projection of the effective LC index indicatrix is shown in plot (c) of Fig. 15. Since this is a vertical plane, the longer indicatrix pixel gives a lower effective retardance for normal incidence rays and hence advancing phase versus the shorter indicatrix pixels.

In the embodiments described with reference to Fig. 14 a polarization-selective hologram in accordance with the instant invention is used in a non-mechanical aberration correction scheme. Advantageously, the non-periodic mask **310** is uniform in layer thickness across the clear aperture. When the optic axis of the uniaxial LC material is aligned to an oblique tilt, as well as the required planar and homeotropic alignment, the phase mask **310** may be used with the liquid crystal cell **210** to provide a polarization-selective wavefront phase correction or total transparency. Advantageously, the polarization-selective phase mask **310** works with linear polarization, which is conveniently provided by the laser diode light sources with a high polarization purity. Accordingly, the polarization-selective phase mask **310** does not need to be positioned after the quarter waveplate **145,** wherein the lack of purity of circularly polarized light may reduce diffraction efficiency.

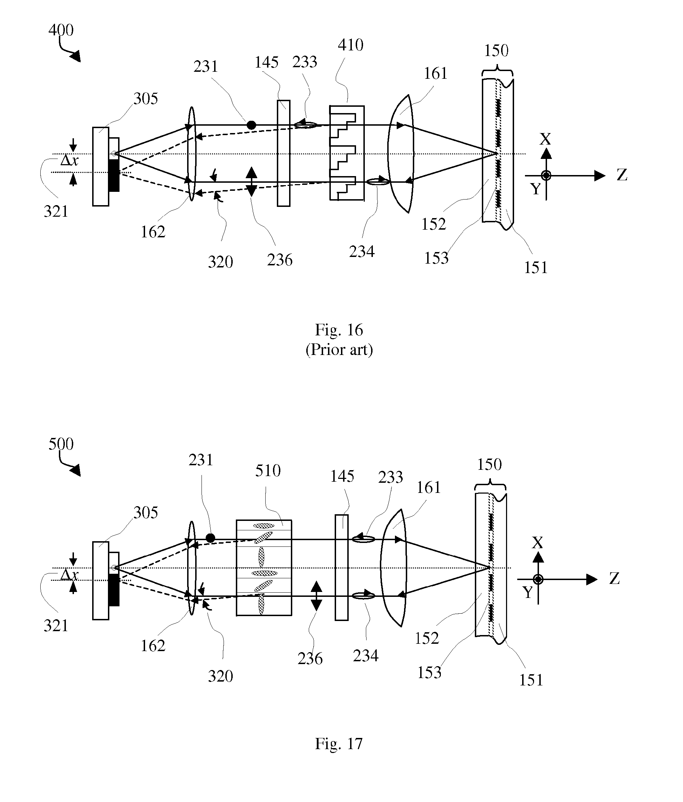

In other embodiments, a polarization-selective hologram in accordance with the instant invention is used as a beam steering element in an OPU. For example, consider the prior art OPU system **400** illustrated in Fig. 16, wherein a polarization-selective periodic grating **410** provides a function similar to the PBS cubes **130** illustrated in Fig. 10. In this system **400,** which is similar to that proposed in Japanese Pat. Appl. JP-A-2001-174614 and US Pat. Appl. No. 2006/0239171, the grating **410** is used to angularly (and spatially) separate the return beam from the optical disc from the radiation coming from the laser diodes. In particular, the grating **410** utilizes the large optical rotary power dispersion near the reflection band edge of a cholesteric liquid crystal and near the absorption band etch of an organic dye to preferentially diffract a required circular polarization to +1 order (e.g., also $\pm$1 orders for binary periodic grating) while being transparent to the orthogonal circular polarization (e.g., there is little to no diffraction, and light appears mostly in the zeroth order).

The OPU system **400** includes a co-packaged laser diode and detector module **305.** The laser diode section of the module **305** launches a divergent beam towards a collimating lens **162,** which produces a parallel beam of a first linear polarization **231** (i.e., which for illustrative purposes shown to be orthogonal to the plane of drawing). The linear polarization **231** is converted to a first circular polarization **233** upon passing through a quarter-waveplate **145.** For a preferred cholesteric helical twist having the opposite handedness as the circular polarization input, this circular polarization **233** is not impacted by the periodic grating **410.** The beam is then focused on the disc media **150** by a high NA objective lens **161.** More specifically, the beam is focussed on an information layer **153** in the disc, which is covered with a protective layer **152** and disposed on a substrate **151.** Reflection off the disc changes the handedness of the circular polarization such that the reflected beam **234** has a second circular polarization that is opposite to the first. Since this second circular polarization has the same handedness as the cholesteric helical twist, the beam is steered by the cholesteric/isotropic periodic grating **410** on return pass. When the beam is transmitted through the quarter-waveplate **145** for a second time, and a second linear polarization results **236** (e.g., which is orthogonal to the first linear polarization). Depending on the grating pitch and wavelength of operation, the return beam is deflected by an angle **320,** according to the grating equation (2). The angular deflection is converted to spatial offset by lens **162,** resulting in a beam offset $\Delta$x **321.**

In other words, the polarization-selective periodic grating **410** functions as a holographic beam splitter, which in a forward propagating direction does not provide beam steering so as to preserve beam energy transmitted to the disc **150,** and in a backward propagating direction provides beams steering so as to separate the information-bearing beam from the input beam. While this scheme is promising, there are several drawbacks related to the polarization-selective periodic grating **410.** First, the wavelength-selectivity of the periodic grating **410** means that only one wavelength of a multiple-wavelength OPU system (e.g., the BD/DVD/CD system illustrated in Fig. 10) can be configured to be diffracting or non diffracting at a given circular polarization. As a result, in order for the holographic beam-splitter to work in a BD/DVD/CD system, it must be designed with three grating layers. This add costs and weight which counters the aim of reducing component size. Note that the wavelength-selectivity is likely related to the fact that the grating works near the cholesteric reflection band edges. A second drawback of the polarization-selective periodic grating **410** is that it works with circularly polarized light. In an OPU system, circularly polarized light is only available between the quarter-waveplate **145** and the disc **150**. In addition, the efficacy of the grating **410** is dependent on the purity of the circularly polarized light generated after the quarter-waveplate. A third drawback is that the periodic grating **410** is typically fabricated with by patterning and etching a substrate, and often by filling the etched substrate. As discussed above, these fabrication techniques are often time consuming and relatively high cost. In addition, when the etched surface is filled with another material, it is likely that the refractive index of the filling material will not match the refractive index of the birefringent grating across all wavelength bands of interest. In the non-diffracting case, the cholesteric pixels and the isotropic pixels do not typically have the same index values and a complete suppression of the unwanted circular polarization at all operating wavelengths may not be possible. A fourth drawback is that the achievable grating resolution is generally limited. For example, consider the first example provided in US Pat. No. 2006/0239171. In this example, where the cholesteric LC has a rather high linear birefringence (e.g., $\Delta n = 0.2$), the 4x4 matrix modeled circular birefringence is approximately 0.04 (e.g., $\pi$ phase step at $\lambda = 660$nm and physical step height of the binary grating of 8.8$\mu$m). This large step impacts the achievable grating resolution. For example, to create a 1$\mu$m pixel width, a 9:1 aspect ratio (height to width ratio) is required, which makes the etching step difficult. For higher-efficiency multi-level phase gratings, the required phase range may approach $2\pi$, requiring even larger aspect ratios. In other words, the prior art is limited in practice to binary phase gratings having coarse grating resolutions, which are not efficient and have small steering angles.

Referring to Fig. 17, a schematic diagram of an OPU **500** in accordance with an embodiment of the instant invention is shown, wherein a polarization-selective periodic LC diffraction grating **510** is provided to replace the polarization-selective periodic grating **410** used in Fig. 16. This non-etched and flat (NEF) LC diffraction grating **510** utilizes a variable tilt LCP film to create an array of variable retarder elements. The slow-axes of all grating pixels are aligned in the same azimuthal plane, but with different amounts of polar angle tilt.

In operation, a co-packaged laser diode and detector module **305** launches a divergent beam towards a collimating lens **162,** which produces a parallel beam of a first linear polarization **231** (e.g., which for illustrative purposes is shown orthogonal to the plane of drawing). This linear polarization **231** is orthogonal to the tilt-plane of the polarization-selective LC hologram **510**. Since the LC hologram is transparent to this linear polarization, the transmitted light is contained in the zeroth order and is converted to a first circular polarization **233** upon passing through a quarter-waveplate **145**. The beam is then focused on the disc media **150** by high numerical aperture (NA) objective lens **161**. Reflection at the disc **150** changes the handedness of the circular polarization and upon return, beam **234** has the second (opposite) handedness of beam **233**. The second circular polarization then passes through the quarter-waveplate **145** for a second time to provide a second linear polarization **236**. This second linear polarization is steered by the polarization-selective LC periodic grating **510** on return pass. Depending on the grating pitch and wavelength of operation, the return beam is deflected by an angle **320,** according to the grating equation (2). The angular deflection is converted to spatial offset by lens **162,** resulting in a beam offset $\Delta x$ **321**.

In contrast to the prior-art circular-polarization-selective grating **410** discussed above, the polarization-selective LC periodic grating **510** is selectively a hologram and a transparent device, depending on the state of linear polarization input. In contrast to the narrow-band characteristics of a near band-edge cholesteric alternating with isotropic-filling grating **410,** the polarization-selective LC periodic grating **510** is operational over a relatively broad band.

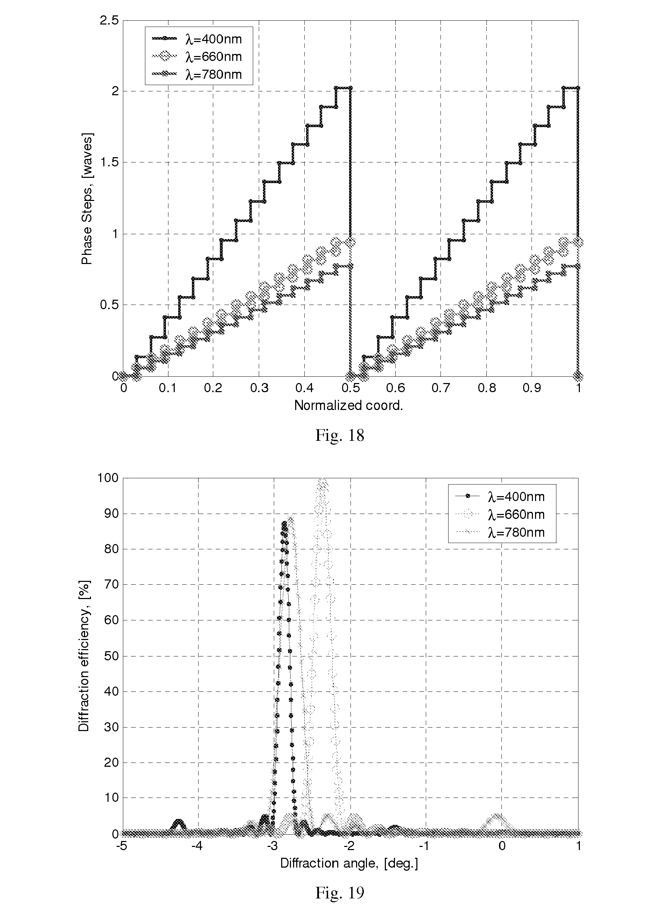

As an example, simple grating structures intending to steer light to only the first diffraction order for three discrete wavelength of Blu-ray Disc(BD) or High-definition (HD)-DVD/DVD/CD OPU system is illustrated in Fig. 18. The LC hologram tilt profile is configure as a lossless phase-only grating at the intermediate wavelength of 660nm. The phase ramp is configured by varying the LC tilt in successive pixels. At the design wavelength of 660nm, the 16-level phase grating spans 0 to 15$\pi$/8 and each encoding pixel is assumed to have a width of 1$\mu$m. With the LC material described above, the LC film thickness is 5.9$\mu$m, if a full range of 0 to 90 degree tilt is usable. At the longer 780nm wavelength, the natural dispersion of the LC mixture results in less than $2\pi$ phase ramp. The hologram diffraction at this wavelength will have zeroth order undiffracted light output. Conversely, the increase birefringence at the short 400nm wavelength coupled with the shorter full-wave optical path difference requirement results in nearly $4\pi$ of phase ramp at $\lambda = 400$nm. This means that first order diffraction angles will be approximately the same for all three discrete wavelengths (e.g., at $\lambda = 400$nm, the wavelength is nearly half that of $\lambda = 780$nm, but its spatial grating period is also nearly half that of the NIR grating). The angular spectrum of the thin LC grating for a polarization input parallel to the LC tilt plane is show in Fig. 19. The design wavelength channel has a first order diffraction efficiency (DE) of approximately 98%. The other two light channels had a first order DE of approximately 88%. In addition, when the input polarization is orthogonal to the LC tilt plane, the LC hologram behaves as a zeroth order grating at any wavelength of illumination. The zeroth order grating may be lossless if polarization purity is assured and external AR losses are excluded.

In US patent application 2006/0239171, the overall thickness of their binary cholesteric/isotropic grating was approximately 10$\mu$m (e.g., which is similar to the above described 5.9$\mu$m). However, the symmetric replay meant that the first order DE is at best 40%. In some other wavelength bands, the reported theoretical DE is less than 10%, due to the phase encoding inefficiency of the dye-based material. With the low circular birefringence in the prior-art techniques, coupled with the requirement to perform photolithography and etching, the aspect-ratio constraint will not permit more than several phase steps. Furthermore, a single grating fabricated this way will not permit simultaneous steering of multiple channels because the circular birefringence is derived close to the absorption/reflection band edges.

Advantageously, the use of the polarization-selective hologram **510** resolves the above-described problems with the prior art (e.g., inadequate phase modulation, severe aspect ratio, low diffraction efficiency, lack of multiple channel operation, etching of material, etc.).

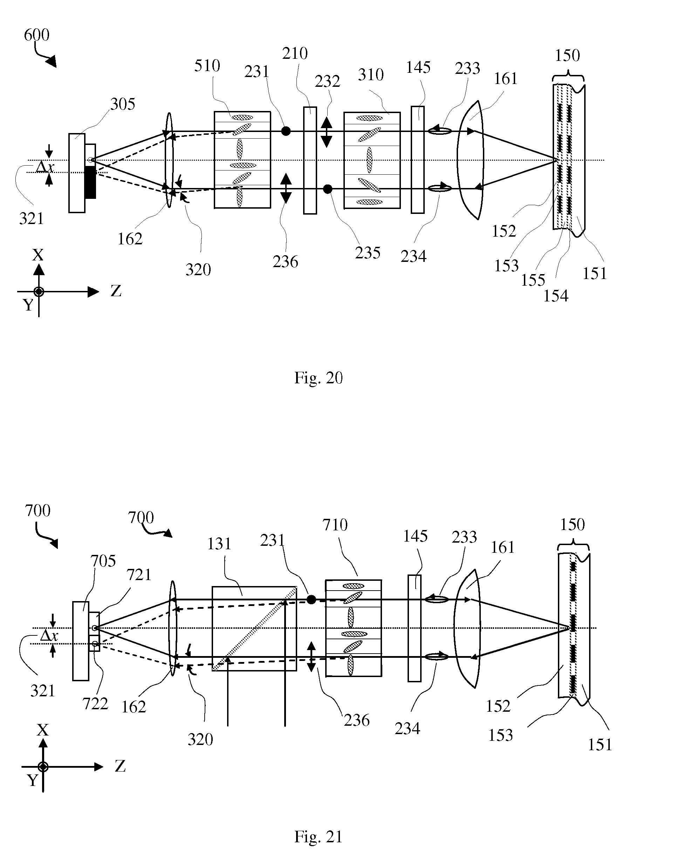

Referring to Fig. 20, a schematic diagram of an OPU **600** in accordance with an embodiment of the instant invention is shown, wherein a first NEF thin hologram **510,** which is a periodic grating, functions as holographic beam splitter and a second NEF thin hologram **310,** which is a non-periodic phase mask, pre-conditions the wavefront of a reading/writing beam when the objective lens is refocused onto a non-design information layer depth. In this embodiment, the first **510** and second **310** NEF thin holograms function as described with reference to FIGS. 17 and 14, respectively. The disc **150** is shown to include a first information layer **153** and a second information layer **154,** which are disposed on a substrate **151** and separated with a spacer layer **155.**

Referring to Fig. 21, a schematic diagram of an OPU **700** in accordance with another embodiment of the instant invention is shown, wherein a NEF thin hologram **710** is used to tap off a small amount of the return beam. In commercial OPU systems, a small amount of the return beam is frequently tapped in order to track the spiral grooves on the disc media, astigmatism induced by disc warpage, and/or disc placement at an angle versus the read/write beam. The tap-off beam is often imaged to multiple element arrayed-detector. The actual signal beam is allowed to go through to the main photodiode. In such a scenario, the LC hologram design may seek to contain the main beam within the zeroth order and allow a small fraction (say 5%) of the light to one or more replay orders. The OPU system **700** launches one or more channels of laser diode output to the common path via the reflecting port of the PBC **131.** The S-polarization is not diffracted by the polarization-selective LC hologram **710** in the first pass. On the return pass, the polarization is converted to one that is parallel to the tilt plane of the LC hologram. The LC hologram is now designed and encoded to replay a large zeroth order. Accordingly, a co-packaged detector array **705** includes the main photodiode **721** for detecting the main signal and one or more auxiliary photodetectors **722** for detecting the tracking beam(s). This predominantly zeroth-order replay can be accomplished, for example, by deliberately providing inadequate phase range. The ideal phase range (e.g., the difference of the first to the last phase steps available for pixel encoding) is $2\pi*(m\text{-}1)/m$, where $m$ is the number of phase levels. For example, lossless binary and quarternary phase-only holograms require $\pi$ and $1.5\pi$ phase ranges. The zeroth order undiffracted light (e.g., the sum of the geometric center replay) and all high replication centers is given by,

$$DC = \frac{\mathrm{sinc}^2\left(\frac{m}{(m-1)}\frac{\Phi}{2}\right)^2}{\mathrm{sinc}^2\left(\frac{1}{(m-1)}\frac{\Phi}{2}\right)^2} \text{,} \tag{8}$$

where $\Phi$ is the total phase range available for encoding up to $m$ levels of phase steps, $\mathrm{sinc}(x) = \sin(x)/x$ and $\mathrm{sinc}(0)=1$. For a binary phase hologram, the DC undiffracted light fraction is $\cos^2(\Phi/2)$. A binary hologram may be the most suitable for tracking purpose in an OPU, where the symmetric replay orders may be useful in detecting geometric skewing and most of the light has to be contained in the zeroth order (i.e., where the diffracted orders do not have to be efficient). For example, if 90% of the light is to be retained as the zeroth order, a binary grating only has to have a phase modulation of ~37 degrees. Under ideal encoding condition, including equal pixel widths of 0 and 37-deg, phase steps, the $\pm1$st orders can be expected to yield about 4% light output for tracking purpose. In other embodiments, the polarization-selective LC hologram may be configured to replay the signal beam to the first diffraction order and the tracking beams to other replay orders.

In the embodiments described above, the polarization-selective thin LC holograms provide a phase map for one linear polarization and appear transparent for the orthogonal linear polarization. For example, in one embodiment, the phase map is an aberration correcting non-periodic wavefront map. In another embodiment, the phase map is a periodic grating or hologram that provides beam steering. In these embodiments, the polarization-selective thin LC holograms are supported by a single substrate mounted separately in the corresponding OPU systems. As described above, it is also possible for the polarization-selective thin LC holograms to be supported by another optical element. For example, referring to Fig. 21 the polarization-selective thin LC hologram **710** may be integrated with the quarter waveplate **145.**

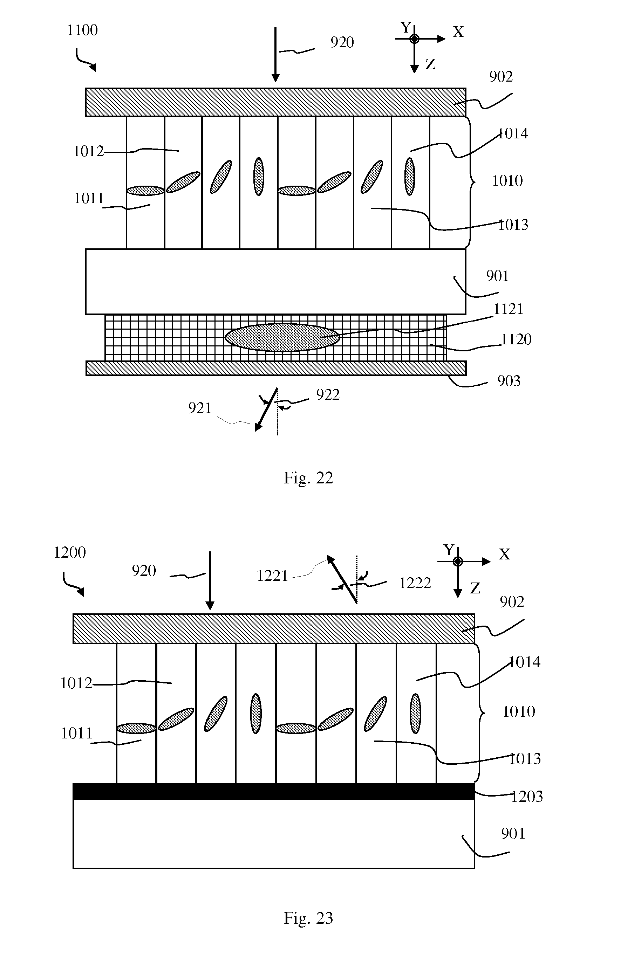

Referring to Fig. 22, a compound polarization-selective device **1100** in accordance with one embodiment of the instant invention includes a substrate **901** onto which a LC hologram 1010 is disposed. The LC hologram **1010** includes several pixels **1011, 1012, 1013, 1014** patterned to effect beam steering. The LC tilt plane is aligned parallel to XZ plane, such that the linear polarization parallel to the XZ plane is beam steered whereas linear polarization parallel to the Y-axis is not affected. On the opposite side of the substrate **901,** a quarter-waveplate **1120** having one or more layers of birefringent materials is disposed. The slow- and fast-axis of the QWP **1120** are typically aligned at ±45 degree with respect to the X or Y-axis. As a result, the indicatrix **1121** shown is a projection of the full indicatrix onto the plane of drawing. The device **1100** also includes optical AR coatings **902** and **903** to enhance the overall transmittance. In the embodiment described with reference to Fig. 22, the QWP is integrated on the opposite side of the substrate. In another embodiment, the QWP is integrated one the same side of the substrate as the LC hologram, either above or underneath the LC hologram layer. Regardless of the configuration, when this compound element **1100** is used in an OPU, such as that described with reference to FIG. 21, it is preferably positioned such that the LC hologram is within the linear-polarization segment of the OPU.

In operation, a light beam incident parallel to the Z-axis **920** is spatially modulated by the encoded phase profile in **1010.** The exiting beam deviates from the specular direction by a small angle. The beam is passed through the QWP **1120,** which converts the linear polarization to a circular polarization. This beam then exits the assembly as **921** having an angle offset **of 922.**

Referring to Fig. 23, a compound polarization-selective device **1200** in accordance with another embodiment of the instant invention is shown. This compound device **1200** includes a LC hologram **1010** that is disposed on a reflector **1203,** which is in turn disposed on a transparent substrate **901.** The opposite side of the LC hologram is coated with an AR coating **902.**

In operation, an incoming light beam **920** is transmitted through the device **1200** such that wavefront is sampled in the first pass towards the reflector, and a second time on its return from the reflector. Accordingly, the required phase range is half that of a transmissive LC grating device. The output beam **1221** is steered towards the angular direction having the denser pixels (i.e., pixels having A-plate or $n_e$ index of refraction within a grating period). For an identical LC hologram configuration (e.g., same pixel size, phase range, phase encoding at each pixel and wavelength of operation) as the transmissive LC grating device **500** illustrated in Fig. 17, device 1200 will steer through twice as large diffraction angle. Note, however, that the diffraction efficiency may not be maintained, since the double pass gives an effect of having fewer phase steps.

In the embodiments described above, the NEF thin LC holograms function as linear polarization-selective beam steering devices. When configured as a single-spot high efficiency grating replay, the LC hologram transmits the ordinary wave unaffected and steers the extraordinary wave by a small angle. The angle offset is approximately the ratio of the wavelength and grating pitch length (eq. 2). Within the visible and NIR wavelength bands and with practical micron-size pixels, a 16-pixel grating can be configured to steer the main beam to about 2 degrees at > 98% efficiency ($\sin^{-1}(0.55/16)$ as steering angle). This quantum of walk-off angle is useful in many applications.

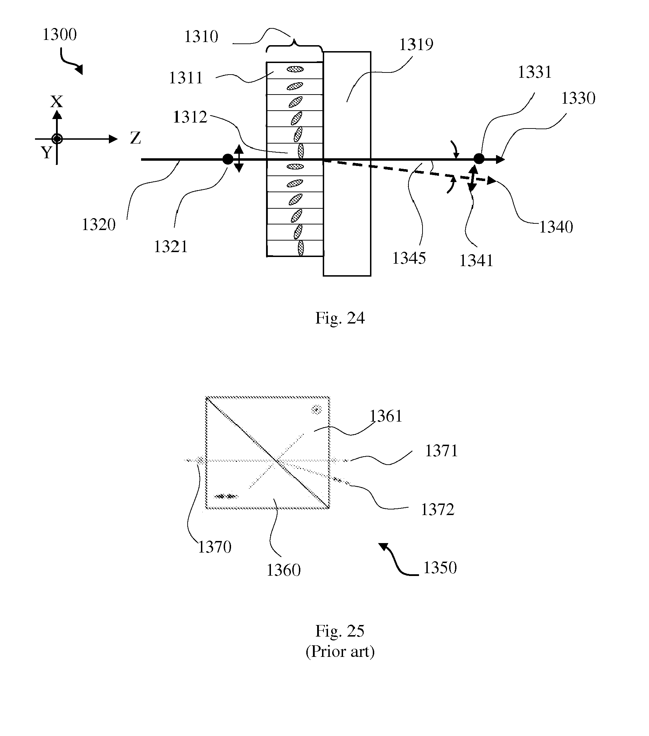

Referring to Fig. 24, a high efficiency LC grating is used as a standalone beam-steering device **1300.** The device **1300** includes a transparent substrate **1319** for supporting a LC grating film **1310.** The LC grating film **1310** includes a plurality of pixels with tailored phase profile effected by arranging the LC out-of-plane tilt as required. One of the phase pixels **1311** is shown to have C-plate optical symmetry. Another of the pixels **1312** is shown to have A-plate optical symmetry. There intervening pixels (e.g., between **1311** and **1312)** are shown to be configured as pixels with O-plate optical symmetry.

In operation, an unpolarized light beam of light **1320** is incident on the left side of the device **1300.** The unpolarized beam of light **1320** includes equal amounts of light polarized parallel to the LC tilt plane and light polarized orthogonal to the LC tilt plane, as indicated by **1321.** As the unpolarized beam of light **1320** passes through the LC grating **1310,** the linear polarization orthogonal to the LC tilt plane samples the o-wave index of the grating pixels and is transmitted unaffected. This o-beam exits as **1330** having a linear polarization perpendicular to the tilt plane **1331.** On the other hand, the linear polarization parallel to the LC tilt plane samples the effective e-wave index of the grating pixels. The spatial phase profile of the grating **1310** creates a differential-phase wavefront, which steers the e-wave to non-zero output angles along a direction parallel to the grating vector plane. The e-wave **1340** exits the LC grating device **1300** having a linear polarization **1341** parallel to the tilt-plane. The steering angle is given by **1345.** It is noted that in general the tilt-plane does not have to be parallel to the grating vector plane. The tilt-plane selects the diffracted linear polarization whereas the grating vector selects the plane of diffraction.

Notably, this single-stage LC hologram device **1300** is functionally equivalent to a prior-art Rochon polarizer made of two crystal wedges. A schematic diagram of a Rochon polarizer is shown Fig. 25. The crystal polarizer **1350** includes a first wedge **1360** which is aligned with its optic axis parallel to the nominal beam direction and a second wedge **1361** which is aligned with its optic axis orthogonal to the plane of drawing. A light ray input **1370** having polarization components parallel and orthogonal to the plane of drawing samples the ordinary index of refraction while propagating through the first wedge unchanged. At the wedge boundary, the linear polarization parallel to the plane of drawing continues to sample the ordinary index in the second wedge and therefore exits the polarizer unaffected (without change in polarization and beam direction). The other linear polarization which is orthogonal to the plane of drawing samples the extraordinary index in the second wedge. With the use of negative uniaxial crystal materials, the resultant drop in index values means the ray is refracted away from the normal line to the wedge boundary. The second linear polarization is steered to an angle while exiting the polarizer. If the wedges are made of calcite crystals, having $n_o$ and $n_e$ indices of [1.66 and 1.49] at $\lambda$=550nm, the large birefringence is calculated to provide about 7-degrees of beam steering within the second wedge which is equivalent to about 10 degree in air. Notably, the NEF diffractive optical elements in accordance with various embodiments of the instant invention have been calculated to yield about 2 degree for 16-phase levels of 1$\mu$m pixel width. While this beam steering is not as large, the NEF diffractive elements provide the advantage of large aperture and thin form factor.

Another application of a polarization-selective hologram in accordance with one embodiment of the instant invention is as a beam-steering element in external cavity lasers. In external-cavity laser systems, a linear polarizer is often used to preferentially select the lasing polarization. The polarizer absorbs/reflects the unwanted polarization and allows the required polarization to continue to build up the round trip amplification before exiting the cavity. Organic absorptive polarizers often lack the reliability requirements for high power operation. A reflective type wiregrid based polarizer creates other issues such as grid cleaning and metal layer absorption.

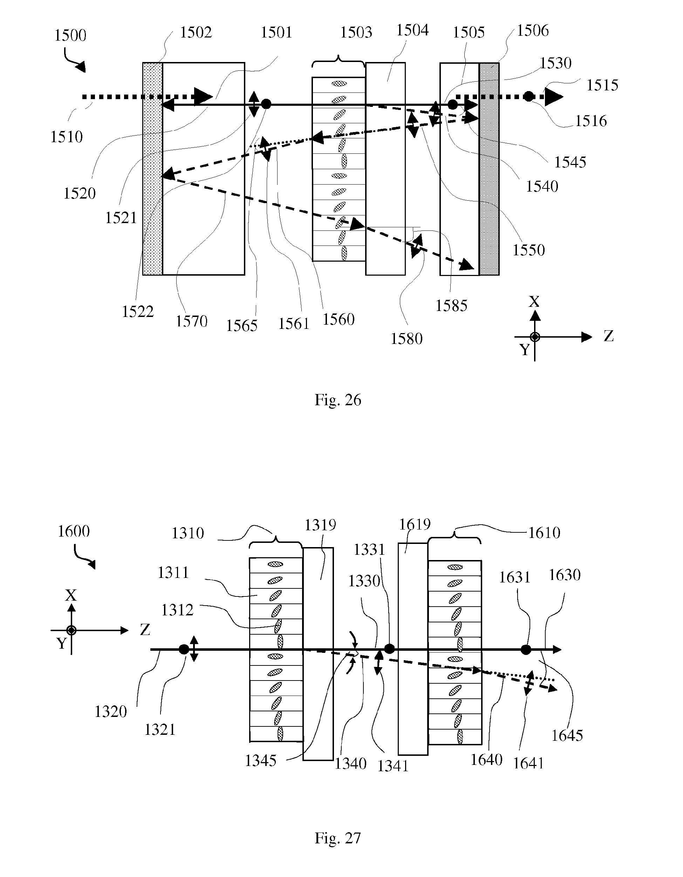

Referring to Fig. 26, an external-cavity solid-state laser system **1500** is shown to include a laser crystal **1501** having a front facet coating **1502,** a polarization-selective beam-steering device **1503** disposed on a transparent substrate **1504,** and a second harmonic generation crystal **1505** with an rear (exit) facet reflector **1506.** The laser crystal **1501** is typically doped with rare-earth metal elements, such as Nd:YAG (neodymium doped yttrium aluminum garnet), Nd:YV$_{O4}$ (neodymium doped yttrium vanadate), etc., in order to produce an emission of the desired wavelength. For example, the diode-pumped light maybe 808nm whereas the emission is 1064nm. The second harmonic generation crystal, for example KTP (potassium titanyl phosphate), is a bulk non-linear crystal which converts the laser crystal emission into another wavelength (e.g, 532nm with the 1064nm input light). The second harmonic generation may also be obtained within the confined waveguide modes of periodically poling lithium niobate. The polarization-selective grating **1503** allows a single polarization of the fundamental frequency light to lase within the laser cavity. The second harmonic light generated with the frequency doubler crystal will then output the same polarization.

In operation, a diode-pump launches a light beam **1510** (e.g., $\lambda$=808nm) into the laser crystal **1501** through the pump-light HT (high transmission) coating **1502.** This light is absorbed by the laser crystal **1501,** which causes an emission of the fundamental frequency light (e.g., $\lambda$=1064nm). The emitted light propagates forward as light ray direction **1520** having a mixture of two orthogonal linear polarizations which are parallel to the plane of drawing **1521** and perpendicular to the plane of drawing **1522.** The polarization-selective LC grating **1503** allows the o-wave (e.g., linear polarization perpendicular to the plane of drawing) to transmit through without deviation as beam **1530,** while diffracting the e-wave (e.g., linear polarization parallel to the plane of drawing) as beam **1540** having small deflection 1545. The equivalent deflection angle in air, after the first pass through the LC grating, $\theta_1$, is sin$^{-1}$ ($\lambda/\Lambda$). Upon reflection from the high reflector **1506** at the fundament frequency light, the deflected beam travels at -$\theta_1$ to the system axis as beam **1550.** This beam is again incident on the polarization-selective grating **1503,** and is transmitted through as beam **1560** which is steered further from the system axis. This second pass beam maintains the linear polarization parallel to the plane of drawing **1561,** at an equivalent deflection angle in air, sin($\theta_2$)= sin(-$\theta_1$) - $\lambda/\Lambda$; sin($\theta_2$) = -2$\lambda/\Lambda$. The beam that has passed the LC grating twice is reflected at the front facet reflector **1502** and propagates as beam **1570** at -$\theta_2$ with respect to the system axis towards the LC grating. This beam is again deflected a third time, giving **1580** and having a deflection angle **1585** given by sin($\theta_3$)= sin(-$\theta_2$) + $\lambda/\Lambda$; sin($\theta_3$) = 3$\lambda/\Lambda$. It can be seen that the linear polarization parallel to the plane of drawing is deflected away from the optical system of the laser system with each transmission through the polarization-selective LC grating. As a result, light having this polarization is highly deviated from the gain segment of the laser crystal such that a coherent lasing action is not permitted. The linear polarization corresponding to the e-wave of the LC grating is suppressed in the laser system and the second harmonic light generation at this polarization is also suppressed. While the linear polarization parallel to the plane of drawing is progressively deflected away from the optical axis of the laser system, the linear polarization perpendicular to the plane of drawing is reflected multiple times along the principal axis as beam **1530.** With each reflection of the front facet **1502** and the rear-facet **1506** reflectors, the amplitude of the fundament frequency light, polarized perpendicular to the plane of drawing is built up. Some of this fundamental frequency light is converted into its second harmonic light by the non-linear crystal **1505.** The second harmonic light exits the laser via a high-transmission rear-facet coating **1506.**

Advantageously, the NEF polarization-selective LC hologram works as a polarization discriminator in the external cavity laser by steering off the unwanted linear polarization. The linear polarization that is suppressed in the system can be chosen by the tilt-plane. The LC hologram is fully flat and aids integrating, handling, and cleaning. In this application, the functionality of the LC hologram is analogous to that of a Rochon polarizer (e.g., where one beam of the first linear polarization is undeflected while the orthogonal beam is diffracted slightly). For a laser system amplification, a very slight angle deflection with each round trip traversing is enough to decrease gain and result in no lasing action for the polarization that is deflected. In addition, the NEF polarization-selective LC grating has a large aperture and a relatively thin form-factor. Note that the grating vector-plane selection is less of importance in a radially-symmetric laser system.

In the above described embodiments, the NEF diffractive optical elements have been single-layer LC grating films, which for example have been used for aberration correction and holographic beam-splitting in OPU systems and lasing polarization selection in external-cavity lasers. In other embodiments, the NEF diffractive optical elements are formed from more than one LC grating layer.

Referring to Fig. 27, a dual-stage device **1600** in accordance with one embodiment of the instant invention includes two LC gratings similar to that illustrated in Fig. 24 disposed in series. More specifically, the compound device **1600** includes a first NEF diffractive optical element **1310** and a second NEF diffractive optical element **1610,** which are fabricated to be close to identical, and which are disposed such that the deflection angles from the two stages are aligned with the same angle sense. For example, in one embodiment the both the LC tilt-plane and the grating vectors are the same in the each of the first and second stage LC gratings.

In operation, a light beam **1320** including both linear polarizations **1321** is split by LC grating **1310** as o-wave **1330** and e-wave **1340.** The second LC grating **1610** placed after the first LC grating **1310** then steers the e-wave a second time, giving a compound deflection angle $\sin(\theta) = 2\lambda/\Lambda$, where $\lambda$ is the wavelength of illumination and A is the grating pitch. The e-wave output **1640** from the two-stage device has the linear polarization **1641** parallel to the plane of drawing, with the deflection angle **1645.** The unaffected linear polarization perpendicular to the plane of drawing exits as beam **1630** with polarization **1631.** This two-stage configuration may be useful if the LC grating thickness cannot be configured to provide a single-stage steering at the required angle of deflection.

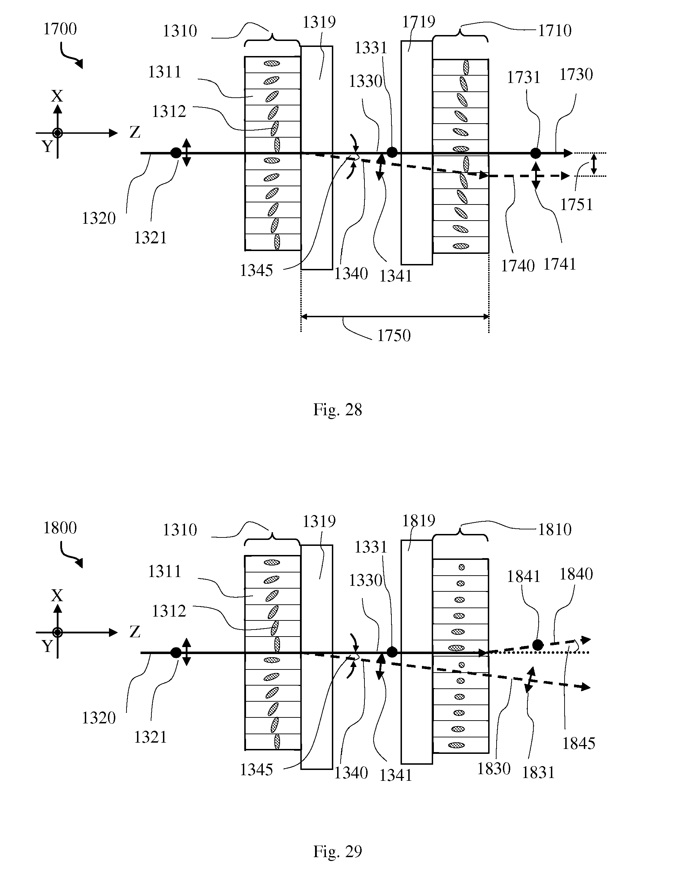

Referring to Fig. 28, a dual-stage device **1700** in accordance with another embodiment of the instant invention includes two of the LC gratings illustrated in Fig. 24 disposed in series. More specifically, the compound device **1700** includes a first NEF diffractive optical element 1310 and a second NEF diffractive optical element **1710,** which are fabricated to be close to identical, and which are disposed such that the deflection angles from the two stages are aligned in opposite angle sense. For example, in one embodiment the LC tilt-plane and grating vectors are parallel in the first and second stage LC gratings, although they do not necessarily coincide. Note, that although the tilt planes are parallel in the two gratings, the gratings are disposed such that the out-of-plane tilts are in opposite directions. For example, in one embodiment the second LC grating **1710** is placed after the first LC grating **1310** such that it is oriented with its azimuthal position rotated by 180 degree, and such that the two LC gratings steer light beams with oppositely signed angles.

In operation, a light beam **1320** including both linear polarizations **1321** is split by LC grating **1310** as o-wave **1330** and e-wave **1340.** The e-wave output from the first stage LC grating **1310** is deflected with an angle $\sin(\theta) = \lambda/\Lambda$ and this becomes the angle of incidence in the second stage LC grating **1710.** The e-wave output of the second stage hologram now steers the incoming beam by $-\sin^{-1}(\lambda/\Lambda)$ which restores the input beam direction. However, due to the propagation at angle $\theta$ between stage 1 and stage 2 for a given distance $l$ **1750** the beam undergoes a lateral translation $\Delta x$. This lateral translation **1751** is approximately given by $\Delta x = l^*\tan(\theta)$ in air. Accordingly, this two-stage device **1700** functions as a beam walk-off element or a beam displacer.

Accordingly, another application of a polarization-selective hologram in accordance with one embodiment of the instant invention is as a beam displacer in an optical circulator, isolator, optical low-pass filter, etc. Advantageously, the polarization-selective hologram, used as a walk-off device with parallel ordinary-ray (o-ray) and extraordinary-ray (e-ray) outputs, is fabricated by cascading two similar gratings. In particular, a first linear grating (1D) sets up a high-efficiency single-order grating replay such that the exiting beam propagates forwards at a characteristic deflection angle until a second, inverse signed angle steering 1D grating corrects for the non-normal beam angle. For a given grating geometry and depending on the gap between the two hologram stages, the lateral offset between the parallel o-ray and e-ray is set accordingly.

Referring to Fig. 29, a dual-stage device **1800** in accordance with another embodiment of the instant invention includes two of the LC gratings illustrated in Fig. 24 disposed in series. More specifically, the compound device **1800** includes a first NEF diffractive optical element 1310 and a second NEF diffractive optical element **1810,** which are fabricated to be close to identical, and which are disposed such that the LC tilt planes of the two LC grating stages are aligned perpendicular, and such that the two LC hologram stages act on orthogonal linear polarizations. More specifically, the second stage LC grating **1810** is arranged to have its grating vector plane parallel to that of **1310,** but with the LC tilt plane at perpendicular plane to that of 1310. The LC indicatrices shown are projections onto the plane of drawing. The second stage LC grating is also configured to steer to the opposite signed angle as the first stage LC grating. As a result of this configuration, the o-wave **1330** and e-wave **1340** outputs from the first LC hologram exit the second LC grating as e-wave **1840** and o-wave **1830,** respectively. The e-wave **1840** is steered through an angle $-\sin^{-1}(\lambda/\Lambda)$ whereas the o-wave **1830** output is unaffected (exit at the original steering angle $\sin^{-1}(\lambda/\Lambda)$).

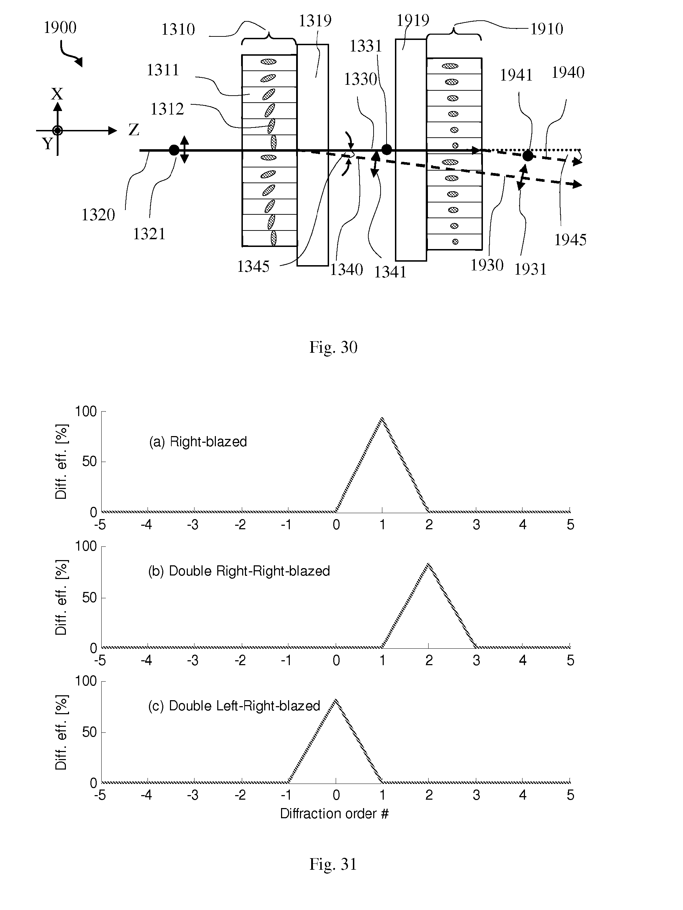

Referring to Fig. 30, a dual-stage device **1900** in accordance with another embodiment of the instant invention includes two of the LC gratings illustrated in Fig. 24 disposed in series. More specifically, the compound device **1900** includes a first NEF diffractive optical element **1310** and a second NEF diffractive optical element **1910,** which are fabricated to be close to identical, and which are disposed such that the LC tilt planes of the two LC grating stages are aligned perpendicular, and such that both linear polarizations inputs to the device are beam-steered. More specifically, the second stage LC grating **1910** is arranged to have its grating vector plane parallel to that of **1310,** but with the LC tilt plane at perpendicular plane to that of **1310.** The LC indicatrices shown are projections onto the plane of drawing. The second stage LC grating is also configured to steer to the same signed angle as the first stage LC grating. As a result of this configuration, the o-wave **1330** and e-wave **1340** outputs from the first LC hologram exit the second LC grating as e-wave **1940** and o-wave **1930,** respectively. The e-wave **1840** is steered through an angle $\sin^{-1}(\lambda/\Lambda)$ whereas the o-wave **1830** output is unaffected (exit at the original steering angle $\sin^{-1}(\lambda/\Lambda)$). Both o- and e-waves exit the compound device parallel. The unique functionality here is that this compound grating is no longer polarization-selective. Bar the small lateral offset due to the thickness of the LC gratings (say several microns), any polarization input is steered by angle $\theta$ to the optical axis. The two substrates in the depicted device **1319** and **1919** may be omitted by coating both the LC grating layers **1310** and **1910** successively on a single substrate.

Each of the four dual-stage configurations **1600, 1700, 1800** and **1900** discussed above, the devices have been configured to have parallel grating vectors in stage one and stage two. In other embodiments, a dual-stage configuration having arbitrary first stage and second stage steering planes (dictated by the grating vectors) is provided. In this case, the LC tilt planes in the first and second gratings will be either parallel or perpendicular to accept both linear polarization inputs.

The two-stage LC holograms have been simulated with an RCWA [rigorous coupled-wave analysis, GSolver by Grating Solver Development Company, Allen, Texas, version 4.20b] program at $\lambda$=550nm, by representing the LC grating as non-polarization-selective air/dielectric blazed grating having 16 phase pixels of 1$\mu$m width each. The results are shown in FIG. 31. A right blaze is a stairs-steps like phase ramp with the right side of a single grating pitch having a longer optical path length when the observer is viewing the beam head-on. This blazed grating steers the beam to the first order, which is located to the right of the zeroth order, as shown in plot (a) of Fig. 31. In this case, the DE approaches 92%, without AR coating on the air/1.5 index grating. In plot (b) of Fig. 31 a first right blazed air/1.5 index grating is followed by a second right blazed air/1.5 index grating. This dual-stage grating steers the output light to twice the spatial frequency as compared to a single grating (plotted as order of 2). In the simulation, neither grating was AR coated and the inter-grating layer had an index of 1.5 and 220$\mu$m physical thickness. The beam displacer is illustrated by results in plot (c) of Fig. 31. The compound grating had a first left-blazed grating nearer to the incidence, followed by a second right blazed grating adjacent to the substrate. The two gratings are separated by an inter-grating layer of 1.5 index and 220$\mu$m physical thickness. Both gratings had identical 16 phase levels, forming a ramp over 16-$\mu$m grating pitch length. The result shows that the steering angle imposed by the first stage grating is corrected by the second stage grating. The output beams are co-linear but are spatially offset by a certain amount (not shown in diffraction simulation). Both dual-stage simulation examples produced about 82% of main order efficiency.

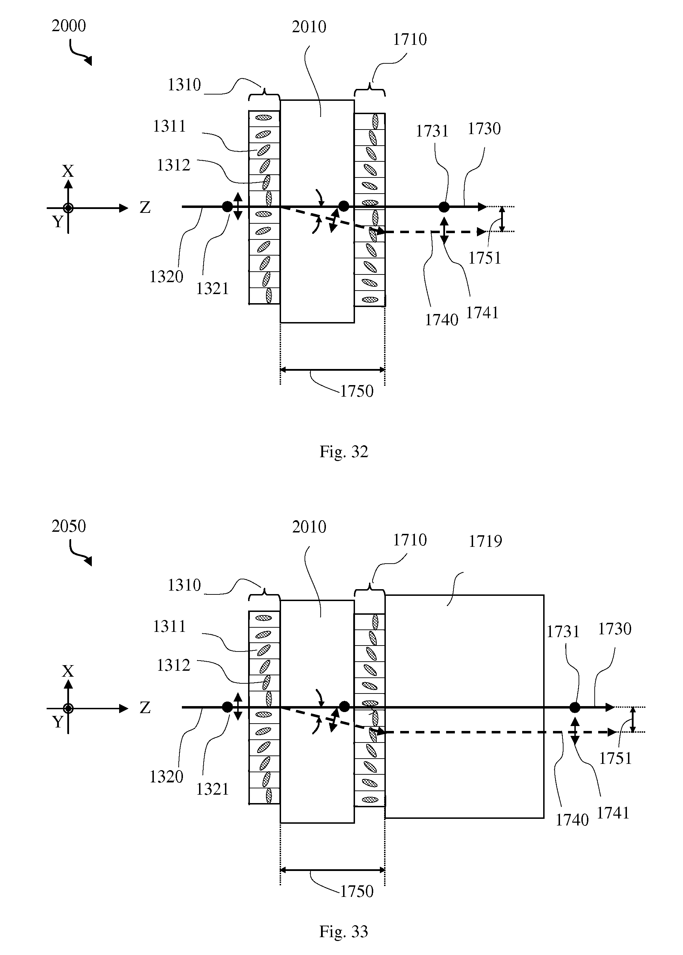

Referring to Fig. 32 the first LC gratings **1310** and second LC gratings **1710** are shown disposed on opposite sides of a single substrate **2010,** respectively. Note that the NEF diffractive optical element **2000** is functionally equivalent to the compound NEF diffractive optical element **1700.** In these figures, like numerals are used to defined like elements. The transparent substrate **2010** supports the LC grating layers and functions as an inter-grating layer. Using the 2-degree steering example described previously (e.g., with 16-pixel grating at 1$\mu$m pixel pitch) and assuming a 1.5 index for the inter-grating layer **2010,** a ~220$\mu$m inter-grating layer will give rise to approximately 5$\mu$m of beam displacement. The exit beams, polarized parallel and perpendicular to the grating vector, are parallel headed. This walk-off of ~5$\mu$m meets the requirement of optical low-pass filter applications. In digital imaging systems, an anti-aliasing technique is to utilize beam walk-off, to ensure that a minimum image spot size is focused onto the electronic CCD/CMOS array backplane. The walk-off is typically implemented with 45-degree cut uniaxial crystal plates of suitable thickness. Crystal plates are expensive to manufacture. Alternatively, spin-coated homogeneous LC films, aligned at 45-degree can be used to provide a suitable walk-off (e.g., see US patent 7,088,510). However, the difficulty associated with the fabrication of thick LC layers (tens of microns) at the required 45-degree tilt makes a homogenous tilt LC film impractical. In comparison, the two-layer LC grating **2000** accomplishes the beam displacement by first providing a beam steering function in the first LC grating, allowing the deflected beam to accumulate spatial offset by an inter-grating layer and finally correcting the beam angle by a second LC grating.

Referring to Fig. 33, there is shown another embodiment of the instant invention, wherein the LC gratings are separated by a deposited inter-grating layer, and are provided on a single-side of a substrate. More specifically, the device **2050** includes a transparent substrate **1719,** onto which a first LC grating **1310** and a second LC grating **1710** are provided, wherein the first and second LC grating layers are separated by an inter-grating layer **2010.** Like numerals have the same definitions as those in Figs. 28 and 32. The exiting beams are polarized orthogonally and are co-linear. The beam separation at the exit is given by,

$$\Delta x = l * \tan(\sin^{-1}(\lambda/(n\Lambda))), \tag{9}$$

where $l$ is the layer thickness of the inter-grating layer having an index of refraction $n$, $\lambda$ is the wavelength of illumination, and A is the grating pitch.

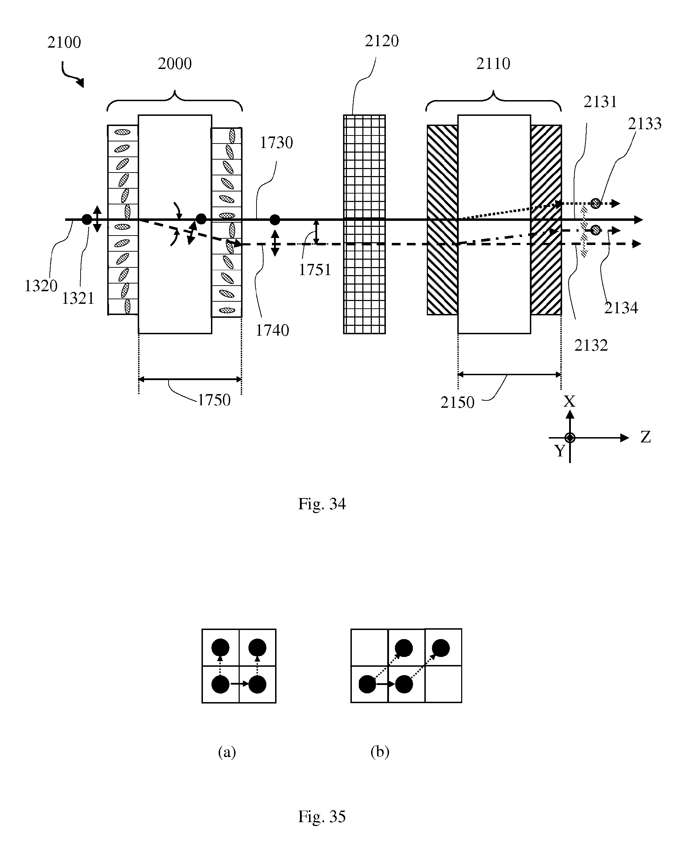

Another application of the NEF diffractive optical elements of the instant invention is as a two-dimensional (2D) walk-off element in an optical low pass filter (OLPF). For example in one embodiment, multiple stages of a walk-off device similar to that shown in FIG. 28 are cascaded to form a OLPF used to cut off high spatial frequency image components in digital imaging systems. Referring to Fig. 34, the 2D walk-off device **2100** includes a first walk-off LC grating device **2000,** a second orthogonal-axis walk-off LC grating device **2110,** and a polarization scrambler **2120.** For an input wave **1320** having two orthogonal linear polarizations **1321,** the first walk-off LC grating device **2000** displaces the e-wave beam **1740** by a predetermined amount **1751** relative to the unaffected o-wave beam **1730.** The two co-linear beams (parallel in direction of propagation) at orthogonal linear polarizations are then scrambled by the polarization scrambler **2120** to yield both orthogonal linear polarizations for each beam. In one embodiment, the polarization scrambler **2120** is a retarder element, such as a quarter-waveplate. The two beams, which include linear polarizations both parallel and perpendicular to the plane of drawing, propagate to the second walk-off LC grating device **2110.** The grating vector for the second LC grating device **2110** is arranged orthogonal to the grating vector of the first grating device **2000.** By this arrangement, the output of the first grating device **2000** is displaced along the plane of drawing while the output of the second grating device **2110** is displaced perpendicular to the plane of drawing.

When the polarization scrambler **2120** is a quarter-waveplate, the fast/slow axis of the quarter-waveplate (QWP) is aligned typically at $\pm 45$ degree with respect to the plane of drawing. The two beams **1730** and **1740** exiting the first walk-off LC grating device are converted to circular polarization by the QWP (i.e. there is equal amount of linear polarizations along any two orthogonal directions). It may be common to choose the tilt-plane to be either parallel (shown in Fig. 34) or orthogonal (not shown) to the grating vector for the second walk-off LC grating device. Approximately half of each beam power is displaced into the plane of drawing by the second walk-off LC grating device. This set of two beams is shown as **2133** and **2134** in Fig. 34. They are polarized parallel to the tilt-plane of the second walk-off LC grating device. The remaining two beams **2131** and **2132,** which were unaffected, are polarized perpendicular to the tilt-plane of the second walk-off LC grating device. Accordingly, the 2D OLPF produces four beam spots for each beam input arrangement in a square grid (or rectangular grid if the quantum of displacement for first stage is not the same as the second stage).

The beam walk-off pattern is shown as plot (a) in Fig. 35. The first stage walk-off displaces a single input beam into two approximately equal intensity spots, as indicated by the solid arrow. Prior to the second stage walk-off, the polarizations of both beams are scrambled. A second stage walk-off along an orthogonal axis then results in four beam spots distributed at four adjacent CCD/CMOS pixels.

In case of walk-off via 45-degree cut crystal plate and without the use of a polarization scrambler, the second stage walk-off may be arranged to have the e-wave axis at $\pm 45$ degree with respect to the first walk-off stage output. Each first stage walk-off output beam is resolved into half e-wave and half o-wave. The e-wave is further displaced along the $\pm 45$ degree diagonal, resulting a diamond shape walk-off pattern (e.g., see plot (b) in FIG. 35).

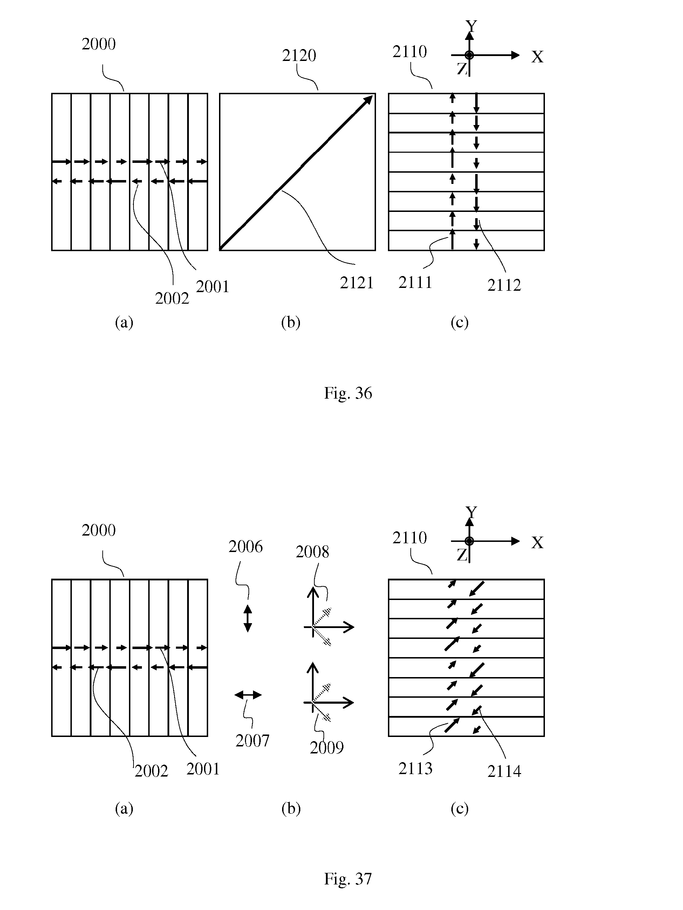

In the case of the walk-off via polarization-selective LC gratings, the polarization scrambler stage may be omitted without sacrificing the ideal square walk-off pattern. The plan view of the two-stage walk-off OPLF with a quarter-waveplate polarization scrambler is depicted in Fig. 36. In (a) the walk-off LC grating device **2000** is shown with a horizontal grating vector. The LC indicatrix projections onto the plane of drawing are shown as **2001** and **2002** for the first layer and the second layer within the first walk-off device. The quarter-waveplate **2120** is shown with a slow-axis **2121** aligned at 45 degree with respect to the grating vector of the first walk-off device (e.g., see diagram (b)). The second walk-off grating device **2110** has its grating vector aligned vertically (e.g., perpendicular to the first grating vector). As was stated previously, the tilt-plane of the second grating device can be chosen arbitrarily since the polarization scrambler results in circular polarization input to the second walk-off grating device. The diagram in (c) illustrates tilt-plane aligned along the second grating vector. The LC indicatrix projections onto the plane of drawing are labelled **2111** and **2112.** The second walk-off grating device displaces the beam in the vertical direction for the fraction of power aligned at vertical polarization.

As discussed above, it is also possible to configure the OPLF without the intermediate polarization scrambler. This scheme is illustrated with reference to Fig. 37. The first walk-off grating device is shown in (a) having a first grating vector in the horizontal plane, similar to that shown in (a) of Fig. 36. The two beams exiting the first walk-off grating device are polarized parallel **2006** and perpendicular **2007** to the plane of drawing. In order to obtain approximately equal e-wave and o-wave power fraction from each beam without polarization scrambling, the tilt-plane of the second walk-off grating device has to be aligned $\pm 45$ degree with respect to the first grating vector. The LC indicatrix projections of the first and second grating layers within the second walk-off grating device are shown as **2113** and **2114.** The input to the second walk-off grating device having a 90 degree second grating vector alignment is shown as **2008** and **2009,** each of which has approximately half beam power along the tilt-plane. The e-wave fractions are displaced vertically (e.g., 90 degree azimuth direction) whereas the o-wave fractions are unaffected. The overall device produces four beam spots for each incoming beam spot, with two-stage walk-off grating devices and without a polarization scrambler.

In the embodiments of the instant invention described above, the NEF polarization-selective diffractive optical element provides a thin hologram element, operating within the paraxial diffraction limit, by judicially arranging the LC out-of-plane tilt across a transverse spatial coordinate in a predetermined manner. The resultant NEF thin hologram has the LC directors aligned homogeneously along a given azimuthal plane. The plane containing the LC director distribution is also the tilt plane. Only light rays polarized along the tilt plane are affected by the variable amount of retardance encoded continuously or in a pixelated manner. The variable amount of retardance is a manifestation of variable optical path length modulation as a function of transverse spatial coordinate. Conversely, light rays polarized along a direction orthogonal to the tilt-plane sees only the ordinary index of refraction regardless ofLC director tilt. The variable optical path length modulation is absent and this orthogonal polarization essentially experiences a zeroth-order grating.

Advantageously, the polarization-selectivity of these NEF thin holograms is exploited in various applications that use linearly polarized light. Some applications related to the polarization-selectivity have been outlined, which include aberration compensation and holographic beam splitting in OPU systems, beam steering based polarization-selection in an external-cavity solid-state laser, and beam walk-off device in optical low-pass filter. Obviously, more applications can be identified with either a single-layer LC hologram or multiple-layer or multiple-stage LC holograms which are polarization-selective. The polarization selectivity is inherent in the LC device with a homogeneous azimuthal orientation. However, in some applications, the selectivity is deliberately turned off, for example by coupling two LC hologram layers with orthogonal tilt plane orientations. Further advantageously, the fabrication technique used to create the NEF diffractive optical elements allows for multi-level phase-only holograms to be recorded such that high diffraction efficiencies are obtained.

Yet another application of the NEF diffractive optical elements is as a variable magnitude birefringent compensator. For example, consider the prior art Babinet-Soleil compensator, which includes two birefringent crystal wedges (e.g., quartz) disposed adjacent to another birefringent plate of the orthogonal birefringent axis alignment. By mechanically translating one of the wedges, a variable amount of retardance is presented to the narrow-diameter probing beam.

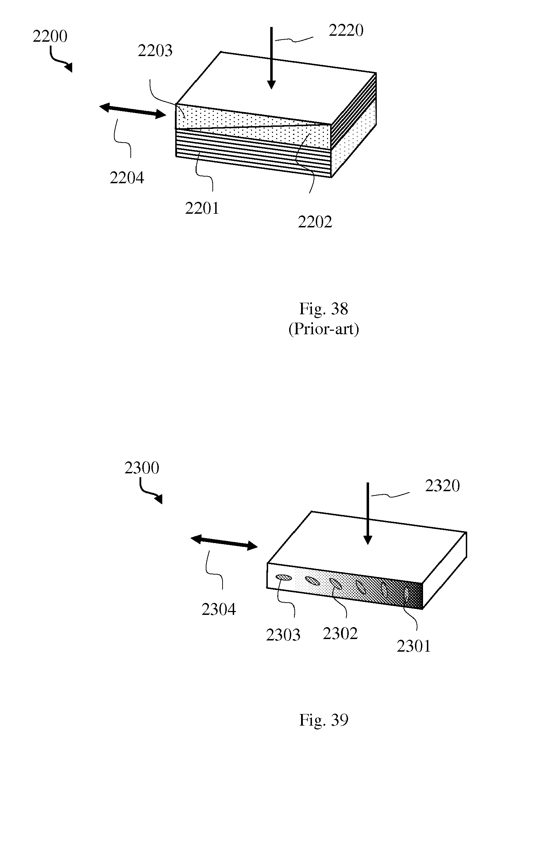

A conventional Babinet-Soleil compensator is illustrated in Fig. 38. This variable-retardance compensator **2200** includes a first homogeneously aligned A-plate **2201** coupled to another birefringent plate made of two birefringent wedges **2202** and **2203.** The A-plate **2201** has its optic axis aligned parallel to the striped direction. The birefringent wedges **2202/2203** are typically cut from crystalline material and are aligned with their optic axes parallel to the striped direction. In other words, the optical axes of the wedges are parallel to each other, but are orthogonal to the optic axis of the first birefringent plate. The top birefringent wedge **2203,** which has its angled-facet facing the angled-facet of the other wedge **2203,** can be translated mechanically in a direction parallel to the optic axis of the first birefringent plate (i.e., along **2204).** This lateral translation results in an effective retardance provided by the combined two wedges. This retardance magnitude is then offset from a second retardance magnitude provided by the first birefringent plate. The retardance difference is the effective retardance as seen by the light input **2220.** This device configuration is similar to a multiple-order waveplate, with the required retardance provided by the difference in retardance realized in each of the two crossed axes retarders. In the case of the Babinet-Soleil compensator **2200,** the net amount of retardance is adjustable by lateral translation of the top-most wedge.

In accordance with an embodiment of the instant invention, a NEF diffractive optical element is used as a variable magnitude birefringent compensator. In particular, the LC out-of-plane director distribution is patterned to provide a precise and accurate variable magnitude birefringence. Referring to Fig. 39, the variable retarder **2300** includes a single layer of LCP, wherein the LC director is distributed in some predetermined manner in such a way that the resultant retardance along a given transverse spatial coordinate is varied in the required manner (e.g., linear versus X-coordinate). This monolithic variable retarder **2300** is shown with several segments of LC director distribution such as C-plate **2301,** O-plate **2302** and A-plate **2303.** The A-plate segment presents the largest amount of retardance relative to the O-plate and/or C-plate segments for a given physical LC thickness. If a linear retardance profile is desired versus transverse spatial coordinate, the LC tilt profile is tailored in a non-linear manner. To obtain a different amount of retardance for a given light input location **2320,** the entire variable retarder is translated by mechanical actuation means **2304** such that a different spatial region is aligned to the input beam. A wide-band variable retarder according to the present invention is feasible, as in the prior-art crystal plate scheme. For example, a variable retarder covering $\lambda$=400nm to 1600nm with up to 1 wave of retardance at the longest wavelength can be configured with a single layer LC film having a continuous LC director variable from C-plate to A-plate. The LC film is assumed to yield about 0.1 birefringence at the long wavelength edge. Hence, the LC film is about 16$\mu$m thick. The short wavelength will see more than 1 wave of retardance due to the normal material index dispersion within this band.

Advantageously, this tunable retarder, which is obtained by continuously splaying the LC out-of-plane tilt as a function of linear position while maintaining a given azimuthal direction, provides variable retardance up to small multiples of lambda with appropriate selection of the device thickness.

Further advantageously, the large substrate handling capability of a non-etched, flat retarder technology allows for multiple retarder magnitude ramps to be patterned and exposed onto a large format substrate. At the wafer level, a grating/hologram type coarse resolution pattern is obtained. Each "period" within the large wafer substrate can be diced into a discrete variable retarder at singulation stage. In general, the slow/fast-axis of the monolithic variable retarder will be anchored homogeneously along a required azimuth, such as $\pm45$ degree versus the rectangular geometry of the retarder. Although polarization selectivity is inherent this NEF diffractive optical element due to the homogeneous azimuthal orientation, in use, the probing beam typically will be small relative to the dimension of the variable retarder (e.g., 1mm beam size versus 10mm end-to-end translation range), such that the variable retarder will not necessarily function as a polarization-selective diffractive optical element.

In each of the above-described embodiments, the fabrication technique used to create the NEF diffractive optical elements only requires a single substrate, and thus produces thinner passive optical elements that are relatively inexpensive, and that are suitable for a wide range of applications. In comparison, prior art references US Pat. No. 7,375,784 and US Pat. No. 6,304,312 both require two transparent substrates, which cooperate to induce alignment of the liquid crystal in the relatively thick liquid crystal cell. In addition, these prior art fabrication techniques are not compatible with providing multi-level phase-only holograms. In contrast, the instant invention provides multi-level phase-only holograms having features that are 1$\mu$m or smaller (e.g., when an array of variable optical path regions are provided in a predetermined manner). Notably, the fabrication techniques used to for the NEF diffractive optical elements do not require the traditional masked and etched processes that provides a surface relief structure (SRS). The fabrication techniques for the present invention also do not require the fabrication of Liquid Crystal cells as an intermediate step and no transparent electrodes for applying electrical pulses for LC alignment are needed. In addition, unlike absorption-based (e.g., intensity modulation) holograms, the resultant phase-only holograms can be made lossless. These passive phase-only LC holograms are also expected to yield higher diffraction efficiencies due to better control of the pixel-fill duty cycle ratio when compared to the actively switched LC hologram, where the SLM pixel array requires row/column addressing lines and pixel addressing circuitry.

Of course, the above embodiments have been provided as examples only. It will be appreciated by those of ordinary skill in the art that various modifications, alternate configurations, and/or equivalents will be employed without departing from the spirit and scope of the invention. For example, various periodic and non-periodic patterns can be used to form the polarization-selective phase holograms (e.g., used for beam steering). In some embodiments, these polarization-selective phase holograms have a pixelated phase profile. In other embodiments, the polarization selective phase holograms have a continuous phase profile. Accordingly, the scope of the invention is therefore intended to be limited solely by the scope of the appended claims.

## Claims

1. A polarization-selective diffractive optical element comprising:

   a substrate;
   an alignment layer disposed on the substrate; and
   a liquid crystal polymer film disposed on the alignment layer, the liquid crystal polymer film including a plurality of liquid crystal directors aligned parallel to a first plane, the first plane perpendicular to a surface of the liquid crystal polymer film, an out-of-plane tilt of the plurality of liquid crystal directors varying with transverse spatial coordinate in a predetermined pattern, the predetermined pattern selected such that the liquid crystal polymer film forms a polarization-selective phase hologram,
   whereby linearly polarized light having a first polarization is transmitted through first and second spatially distinct regions of the liquid crystal polymer film with a relative phase delay to provide a non-zeroth order diffraction output, and linearly polarized light having a second polarization is transmitted through the first and second spatially distinct regions with substantially zero relative phase delay to provide a zeroth order diffraction output, the first polarization parallel to the first plane, the second polarization orthogonal to the first polarization, the first region including a first liquid crystal director, the second region including a second liquid crystal director, the first and second liquid crystal directors having different out-of-plane tilts.

2. A polarization-selective diffractive optical element according to claim 1, wherein the predetermined pattern is selected such that the liquid crystal polymer film includes a plurality of pixels, each pixel encoded with a single liquid crystal director alignment.

3. A polarization-selective diffractive optical element according to claim 2, wherein the predetermined pattern includes a finite number of different out-of-plane tilt angles, the finite number greater than two and less than sixty-five.

4. A polarization-selective diffractive optical element according to claim 1, wherein the phase hologram includes a grating vector that is parallel or orthogonal to the first plane.

5. A polarization-selective diffractive optical element according to claim 1, wherein the phase hologram includes a grating vector that is at an oblique angle to the first plane.

6. A polarization-selective diffractive optical element according to any of claims 1 to 5, wherein the predetermined pattern is selected to form a non-periodic phase mask for providing aberration correction in an optical pick-up unit.

7. A polarization-selective diffractive optical element according to any of claims 1 to 5, wherein the predetermined pattern is selected to form a grating for redirecting a beam of light reflected from an optical disc disposed in an optical pick-up unit away from an input optical path.

8. A polarization-selective diffractive optical element according to any of claims 1 to 5, wherein the predetermined pattern is selected to form a grating for providing polarization discrimination in an external cavity laser.

9. A polarization-selective diffractive optical element according to claim 2, wherein a size of the pixels and the predetermined pattern are selected to form a grating for providing beam steering for light having the first polarization.

10. A polarization-selective diffractive optical element according to claim 9, wherein the liquid crystal polymer film is disposed in series with a second liquid crystal polymer film, the second liquid crystal polymer film including a second plurality of liquid crystal directors aligned parallel to a second plane, the second plane perpendicular to a surface of the second liquid crystal polymer film, an out-of-plane tilt of the second plurality of liquid crystal directors varying with transverse spatial coordinate in the predetermined pattern.

11. A polarization-selective diffractive optical element according to claim 10, wherein the liquid crystal polymer film is oriented relative to the second liquid crystal polymer film such that an unpolarized beam of light incident on the polarization-selective diffractive optical element is converted to two substantially parallel beams of light having orthogonal polarizations.

12. A polarization-selective diffractive optical element according to claim 1, wherein the substrate includes at least one of a waveplate and a reflective surface.

13. A method of fabricating a polarization-selective diffractive optical element comprising:

irradiating an alignment layer at oblique angle through a photo-mask with linearly polarized UV light;
coating a liquid crystal layer on the irradiated alignment layer, the liquid crystal layer including a liquid crystal polymer precursor;
irradiating the liquid crystal layer to form a liquid crystal polymer film, the liquid crystal polymer film including a plurality of liquid crystal directors aligned parallel to a first plane, the first plane perpendicular to a surface of the liquid crystal polymer film, an out-of-plane tilt of the plurality of liquid crystal directors varying with transverse spatial coordinate in a predetermined pattern, the predetermined pattern selected such that the liquid crystal polymer film forms a polarization-selective phase hologram,
whereby linearly polarized light having a first polarization is transmitted through first and second spatially distinct regions of the liquid crystal polymer film with a relative phase delay to provide a non-zeroth order diffraction output, and linearly polarized light having a second polarization is transmitted through the first and second spatially distinct regions with substantially zero relative phase delay to provide a zeroth order diffraction output, the first polarization parallel to the first plane, the second polarization orthogonal to the first polarization, the first region including a first liquid crystal director, the second region including a second liquid crystal director, the first and second liquid crystal directors having different out-of-plane tilts.

14. A method according to claim 13, wherein the photo-mask comprises one of a variable transmission mask and a variable size aperture mask.

15. An optical pick-up unit comprising:

a light source for emitting linearly polarized light having a first polarization;

a collimating lens for collimating the linearly polarized light;

an objective lens for focusing the collimated linearly polarized light onto an optical disc;

a quarter-wave plate disposed between the collimating lens and the objective lens for providing quarter-wave retardance such that light reflected from the optical disc is transmitted towards the first lens as linearly polarized light having a second polarization, the second polarization orthogonal to the first polarization; and

a polarization-selective diffractive optical element disposed between the collimating lens and the quarter-wave plate, the polarization-selective diffractive optical element including a substrate, an alignment layer disposed on the substrate, and a liquid crystal polymer film disposed on the alignment layer, the liquid crystal polymer film including a plurality of liquid crystal directors aligned parallel to a first plane, the first plane perpendicular to a surface of the liquid crystal polymer film, an out-of plane tilt of the plurality of liquid crystal directors varying with transverse spatial coordinate in a predetermined pattern, the predetermined pattern selected such that the liquid crystal polymer film forms a polarization-selective phase hologram,

wherein the polarization-selective diffractive optical element is disposed such that the first polarization is polarized perpendicular to the first plane and such that the polarization-selective phase hologram provides zero order diffraction for the linearly polarized light having the first polarization and non-zeroth order diffraction for the linearly polarized light having the second polarization, the non-zeroth order diffraction providing a beam deflection sufficient to redirect the linearly polarized light having the second polarization away from the light source and towards a detector.

Fig. 1a
(Prior art)

Fig. 1b
(Prior art)

Fig. 2a

Fig. 2b

Fig. 2c

60

71

70

73

72

75

67

66

65

Fig. 3

Effective in-plane birefringence

Effective out-of-plane tilt angle

UV dose, [energy/area]

Fig. 4

max. 90-deg. tilt w/d=2.17μm

Fig. 5

(a)                                    (b)

Fig. 6

Fig. 7

Fig. 8

Fig. 9a

Fig. 9b

Fig. 9c

Fig. 10
(Prior art)

Fig. 11
(Prior art)

Fig. 12
(Prior art)

Fig. 13
(Prior art)

Fig. 14

Fig. 15

Fig. 16
(Prior art)

Fig. 17

Fig. 18

Fig. 19

Fig. 20

Fig. 21

Fig. 22

Fig. 23

1300

1310

1311

1312

1319

1331

1330

X

Z

Y

1320

1321

1345

1341

1340

Fig. 24

1361

1371

1372

1370

1360

1350

Fig. 25
(Prior art)

Fig. 26

Fig. 27

Fig. 28

Fig. 29

Fig. 30

Fig. 31

Fig. 32

Fig. 33

Fig. 34

Fig. 35

2000

2120

2110

Y

X

Z

2002 2001

2121

2111 2112

(a)

(b)

(c)

Fig. 36

2000

2006

2008

2110

Y

X

Z

2007

2009

2002 2001

2113 2114

(a)

(b)

(c)

Fig. 37

2200

2203

2220

2204

2201

2202

Fig. 38
(Prior-art)

2300

2320

2304

2303  2302

2301

Fig. 39

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 0947690 A
- US 6304312 B
- US 7375784 A
- US 6947368 B
- JP 2001174614 A
- US 20060239171 A
- US 7088510 B
- US 7375784 B

**Non-patent literature cited in the description**

- **K.L. TAN et al.** Dynamic holography for optical interconnections. II. Routing holograms with predictable location and intensity of each diffraction order. *J. Opt. Soc. Am. A,* 2001, vol. 18 (1), 205-215